(19) Europäisches Patentamt
European Patent Office
Office européen des brevets

(11) **EP 2 772 917 A1**

(12) # EUROPÄISCHE PATENTANMELDUNG

(43) Veröffentlichungstag:
**03.09.2014 Patentblatt 2014/36**

(51) Int Cl.:
***G11B 7/245*** *(2006.01)* ***G11B 7/254*** *(2013.01)*

(21) Anmeldenummer: **14156117.5**

(22) Anmeldetag: **21.02.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **27.02.2013 EP 13156950**

(71) Anmelder: **Bayer MaterialScience AG**
**51368 Leverkusen (DE)**

(72) Erfinder:
- **Weiser, Marc-Stephan**
  **51377 Leverkusen (DE)**
- **Gertzmann, Rolf**
  **51377 Leverkusen (DE)**
- **Ludewig, Michael**
  **51519 Odenthal (DE)**
- **Flemm, Ute**
  **42697 Solingen (DE)**
- **Hentschel, Daniel**
  **51109 Köln (DE)**
- **Bruder, Friedrich-Karl**
  **47802 Krefeld (DE)**
- **Rölle, Thomas**
  **51381 Leverkusen (DE)**
- **Berneth, Horst**
  **51373 Leverkusen (DE)**
- **Hönel, Dennis**
  **53909 Zülpich-Wichterich (DE)**
- **Fäcke, Thomas**
  **51375 Leverkusen (DE)**

(74) Vertreter: **BIP Patents**
**c/o Bayer Intellectual Property GmbH**
**Creative Campus Monheim**
**Alfred-Nobel-Straße 10**
**40789 Monheim (DE)**

(54) **Schutzlacke auf Basis von strahlenvernetzbaren Polyurethandispersionen**

(57) Die Erfindung betrifft einen Schichtaufbau aus mindestens einer Schutzschicht und mindestens einer belichteten Photopolymerschicht, wobei die Schutzschicht durch Aufbringen einer strahlenhärtbaren wässrigen Polymerdispersion, bevorzugt Polyurethandispersion, Trocknung der Dispersion und Strahlenhärten erzeugt ist, dadurch gekennzeichnet, dass die Schutzschicht bei einer Schutzschichtdicke von 14 μm bis 26 μm eine totale Transmission von > 90%, einen L-Wert gemäß der CIELAB-Systematik von L > 96 sowie einen Haze-Wert von < 1,0% aufweist.. Die Erfindung betrifft zudem ein Verfahren zur Erzeugung eines solchen Schichtaufbaus.

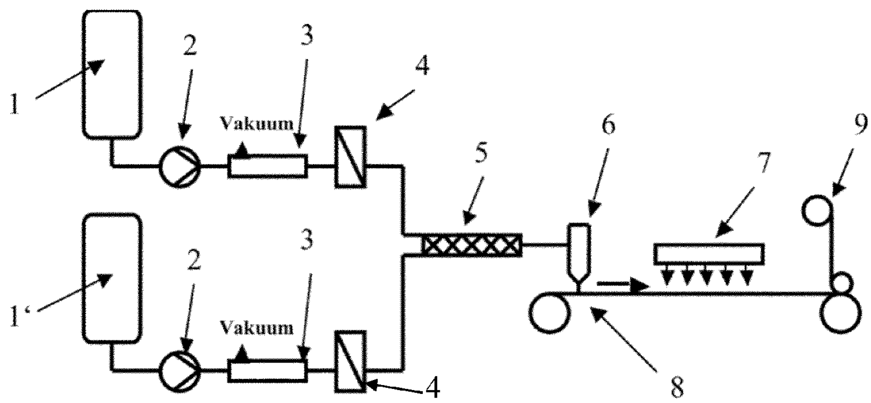


Fig. 1

EP 2 772 917 A1

## Beschreibung

Die Erfindung betrifft einen Schichtaufbau aus mindestens einer Schutzschicht und mindestens einer belichteten Photopolymerschicht, wobei die Schutzschicht durch Aufbringen einer strahlenhärtbaren wässrigen Polymerdispersion, bevorzugt Polyurethandispersion, Trocknung der Dispersion und Strahlenhärten erzeugt ist, sowie ein Verfahren zur Erzeugung eines solchen Schichtaufbaus.

WO 2011/054797 und WO 2011/067057 beschreiben Formulierungen zur Herstellung eines polyurethan-basierten Photopolymers zur Herstellung holografischer Medien. Vorteile dieser holografischen Medien ist deren hohe diffraktive Lichtbeugungseffizienz und, dass keine Nachprozessierungsschritte nach der holografischen Belichtung wie z.B. chemische oder thermische Entwicklungschritte nötig sind. Die Herstellung eines Folienschichtaufbaus enthaltend oben genannte Photopolymerformulierungen wird u.a. in den oben geannten Dokumenten beschrieben. Ebenso wird in diesen Schriften dargelegt, dass die erhaltenen Photopolymerschichten zur Herstellung von Transmissionshologrammen und optischen Elementen geeignet sind.

Transmissionshologramme finden eine typische Anwendung im Displaybereich, wo sie zum Beispiel als gerichtete Diffusoren eingesetzt werden können (Ackermann und Eichler, Optical Holography a Practical Approach, Wiley VCH Verlag GmbH & Co. KGaA, Weinheim, 2007, Kapitel 19, Seite 248). Da das Hologramm dann jedoch Bestandteil eines Displays ist, werden hohe Anforderungen an die Transparenz und Lichtdurchlässigkeit gestellt. Gleichzeitig ist eine Eigenfärbung der verwendeten Schichten unerwünscht, da es unnötige Farbkorrekturen in den Beleuchtungseinheiten nötig macht beziehungsweise bei zu starker Eigenfärbung eine Farbkorrektur nicht mehr möglich ist.

Im Rahmen der Produktintegration werden Folien in Displays häufig mit sogenannten "Optical Clear Adhesives" (OCAs), also besonders optisch klaren Haftklebefolien verklebt. Diese sind typischerweise acrylat-basiert und gehören häufig zu den Standardmaterialien der Displayhersteller. Wie in der WO 2013/102603 gezeigt, führt die Verbindung acrylat-basierter Haftklebstoffe mit oben genannten Photopolymerschichten jedoch zu einem Farbshift in der Braggbedingung für Reflektionshologramme, der auf eine Veränderung der holografischen Gitterperiode zurückzuführen ist. Rekonstruiert man das Reflektionshologramm mit Weißlicht unter dem Einfallswinkel des zum Schreiben des Hologramms verwendeten Referenzstrahls erscheint es in einer anderen Farbe als es der Laserwellenlänge, die zum Schreiben des Hologramms verwendet wurde entspricht. Grundlage hierfür sind Diffusionsvorgänge migrierbarer Komponenten zwischen den Schichten, die zu Schrumpf oder Quellung der Gitter führen.

Die in Displays verwendeten Transmissionshologramme wirken als holografische optische Elemente (HOEs) und erfüllen eine Lichtlenkungsfunktion die zum Beispiel eine Fokussierung von Licht oder eine Ablenkung von Licht einer bestimmte Wellenlänge oder eine Kombination beider Effekte beinhalten kann. Insbesondere können mit solchen HOEs die Baugrößen gegenüber klassischer refraktiver Optik drastisch reduziert werden beziehungsweise völlig andersartige Lichtlenkfunktionen als mit refraktiver Optik realisiert werden. HOEs und insbesondere Transmissionshologramme zeigen ihre beste Performance, wenn sie mit Laserlicht rekonstruiert werden. Bei der Verbindung mit Schichten enthaltend acrylat-basierter Haftklebstoffe tritt ebenfalls eine Veränderung der holografischen Gitterperiode analog zu oben beschriebenem Phänomen bei Reflektionshologrammen auf. Diese führt allerdings hier nicht zu einer Farbverschiebung im Hologramm, insbesondere wenn es mit monochromatischem Laserlicht oder einer Kombination aus mehreren Laserwellenlängen rekonstruiert wird, sondern zu einer Winkelverschiebung in der Lichtlenkung. Der Effekt ist jedoch ebenso unerwünscht, da die Fokussierung oder / und die gezielte Ablenkung nicht mehr gewährleistet werden kann.

Da die Display-Hersteller oftmals ihre Klebeschichten nicht ändern wollen und alternative Haftklebstoffe gleicher optischer Güte, die nicht acrylat-basiert sind, schwierig zu erhalten sind, bestand ein Bedarf für einen Verbund aus einer Photopolymerschicht und einer Schutzschicht, die gegenüber angrenzenden Schichten wie z.B. Klebstoffschichten Veränderungen des Hologramms durch Schrumpf oder Quellung der Gitter verhindert und gleichzeitig eine exzellente optische Qualität besitzt.

EP 2 613 318 beschreibt, dass durch geeignete Auswahl der Komponenten Schutzschichten auf eine belichtete Photopolymerschicht aufgebracht werden können. Diese Schutzschichten lassen sich durch Umsetzung wenigstens eines strahlungshärtenden Harzes I), eines Isocyanat-funktionellen Harzes II) und eines Photoinitiatorsystem III) herstellen. Die in EP 2 613 318 beschriebenen Schutzschichten erfüllen die Voraussetzungen für eine geeignete Schutzschicht, da sie nach Applikation ermöglichen einen Schichtaufbau mit einer Schutzschicht und einer belichteten Photopolymerschicht bereitzustellen, der mit unterschiedlichsten angrenzenden Schichten wie z.B. Klebstoffschichten fest verbunden werden kann, ohne das es zu einer Volumenänderungen der Photopolymerschicht und einer damit einhergehenden Farbveränderungen des Hologramms kommt.

Die in der EP 2 613 318 offenbarten Zusammensetzungen sind jedoch nicht in jeder Hinsicht zufriedenstellend. Durch das Vorhandensein eines Isocyanat-funktionellen Harzes sind sie vergleichsweise feuchtigkeitslabil und chemisch reaktiv auf isocyanat-reaktive Komponenten wie z.B. OH- und $NH_2$-Gruppen. Solche Gruppen sind jedoch in strahlungshärtenden Harzen oder anderen Hilfsstoffen häufig vorhanden, die für eine technische Formulierung essentiell sind. Dies führt dazu, dass die Zusammensetzung vor Verwendung stets neu angemischt zubereitet werden muss, was die

technische Anwendung einschränkt, da damit am Applikationsort sowohl geeignete Mischapparaturen als auch geeignete Sicherheitsvorkehrungen zur Handhabung Isocyanatfunktioneller Komponenten vorhanden sein müssen. Weiterhin sind spezielle Auftragungsverfahren zu wählen um Schutzschichten von besonderer optischer Qualität herzustellen, wie sie für Anwendung im Bereich holografischer optischer Elemente von Nöten sind. Diese entsprechen häufig nicht den Standardprozessen des Kunden oder können in solche nicht oder nur schwer integriert werden.

Die Aufgabe der vorliegenden Erfindung besteht darin, einen verbesserten Schichtaufbau der eingangs genannten Art zur Verfügung zu stellen, wobei die Schutzschicht leicht aufzubringen ist, die optischen Eigenschaften der belichteten Photopolymerschicht möglichst wenig beeinflusst und die Photopolymerschicht zuverlässig vor Veränderungen durch eindiffundierende Klebstoffbestandteile, beispielsweise aus einem Haftklebeband, und dergleichen schützt.

Die Aufgabe wird erfindungsgemäß dadurch gelöst dass die Schutzschicht bei einer Schutzschichtdicke von 14 $\mu$m bis 26 $\mu$m eine totale Transmission von > 90%, einen L-Wert gemäß der CIELAB-Systematik von L > 96, sowie einen Haze-Wert von < 1,0% aufweist.Für den erfindungsgemäßen Schichtaufbau kann im Prinzip jede strahlenhärtbare Polymerdispersion verwendet werden, wobei der Einsatz einer strahlenhärtbaren wässrigen Polyurethandispersion besonders bevorzugt ist, wobei diese besonders bevorzugt dreidimensional vernetzte Polyurethan-Polymere enthält. Eine Schutzschicht auf Basis einer der vorgenannten Polyurethandispersionen ist besonders geeignet, um ungewollte Veränderungen der optischen Eigenschaften der belichteten Photopolymerschicht durch Eindringen von Klebstoffbestandteilen eines Haftklebebandes weitestgehend zu unterbinden. Insofern ist eine weitere bevorzugte Ausgestaltung des erfindungsgemäßen Schichtaufbaus dadurch gekennzeichnet, dass dieser zumindest eine Haftklebeschicht umfasst, die auf die Schutzschicht aufgebracht ist, insbesondere in Form eines oder mehrerer Haftklebebänder.

Vorzugsweise erzeugt die Schutzschicht auf einer belichteten Photopolymerschicht wie einem Transmissionshologramm allein oder nach Auftragung eines Haftklebebandes maximal einen Winkelshift in dem Transmissionshologramm von einem Betrag kleiner 1 °, bevorzugt < 0,6°.

Bevorzugt hat die Schutzschicht eine hohe optische Qualität.

Besonders bevorzugt weist die Schutzschicht eine totale Transmission von von > 91% auf.

Ebenfalls bevorzugt ist, wenn die Schutzschicht einem gemäß der CIELAB-Systematik ermittelten L-Wert von L > 96,5 aufweist.

Insbesondere bevorzugt ist auch, wenn die Schutzschicht einem Haze-Wert v von < 0,75% aufweist.

Besonders bevorzugt ist auch, wenn die Schutzschicht bei einer Lackschichtdicke zwischen 14 $\mu$m und 26 $\mu$m eine Kombination aus totaler Transmission von > 91%, einem gemäß der CIELAB-Systematik ermittelten L-Wert von L > 96,5 sowie einem Haze-Wert von < 0,75% aufweist.

Die Messung des L-Wertes wird beispielsweise auf einem Kugelspektrometer vom Typ Hunter Ultrascan Pro von Hunter Lab, FMS Jansen GmbH & Co. KG, Murnau am Staffelsee, Deutschland in Anlehnung an die Normen ASTM E 308 für L*a*b* und ASTM E 1348 / ISO 13468 für die Bestimmung der totalen Transmission durchgeführt. Als totale Transmission wird dabei der Mittelwert der Transmission zwischen 360 nm und 840 nm bezeichnet, wobei jeweils 1 Einzelmessung pro 5 nm durchgeführt wird. Zur Messung wird die Lampenart D65 und ein Beobachtungswinkel von 10° benutzt. Der Messbereich ist von 350nm- 1100nm, wobei für die farbmetrische Bestimmung nur bis 850nm gemessen wird. Als Eichung wird eine Messung an Luft verwendet und die Transmission dieser Messung auf 100% gesetzt.

Der Haze-Wert wird gemäß der Norm ASTM D 1003 ermittelt.

Als Schutzschichten sind im Prinzip alle transparenten Lackschichten geeignet, die oben genannte Bedingungen erfüllen.

Erfindungsgemäß ist vorgesehen, dass die Schutzschicht aus einer wässrigen strahlenhärtbaren Polyurethandispersion erzeugt wird. Bei den wässrigen Beschichtungssystemen ist es nicht nur von Vorteil, wenn strahlenhärtbare Beschichtungssysteme nach physikalischer Trocknung block- und grifffest sind, vielmehr sollte nach Strahlenhärtung ein Film erhalten werden, der sich durch hohe chemische Beständigkeit und gute mechanische Belastbarkeit auszeichnet. Diese Beständigkeit bewirkt auch, dass die erhaltenen Lackschichten keine Veränderungen des Hologramms durch Schrumpf oder Quellung der Gitter verursachen.

Geeignete Beschichtungssysteme sind beispielsweise in WO 2011/107398, EP 2 396 356 und EP 2 113 523 beschrieben.

Besonders geeignete strahlenhärtbare, wässrige Polyurethandispersionen enthalten oder bestehen aus Polyurethanacrylaten. Das Polyurethanacrylat enthält als Aufbaukomponenten vorzugsweise folgende Verbindungen:

A) eine oder mehrere Verbindungen mit unvernetzten, polymergebundenen (Meth-)Acrylaten mit einer OH-Zahl von 20 bis 300 mg KOH/g Substanz und/oder

B) gegebenenfalls von A) verschiedene Verbindungen mit mindestens einer gegenüber Isocyanat reaktiven Gruppe und mindestens einer strahlenhärtbaren Doppelbindung,

C) gegebenenfalls eine oder mehrere Verbindungen, die mindestens eine gegenüber Isocyanat reaktiven Gruppe

aber keine strahlenhärtbare Doppelbindungen besitzen,

D) eine oder mehrere Verbindungen mit mindestens einer gegenüber Isocyanat reaktiven Gruppe und zusätzlich nichtionischen, anionischen oder zur Ausbildung von anionischen Gruppen befähigten Gruppen, die für die Polyurethanacrylate dispergierend wirken oder D') eine oder mehrere Verbindungen mit mindestens einer gegenüber Isocyanat reaktiven Gruppe und zusätzlich kationischen oder zur Ausbildung von kationischen Gruppen befähigten Gruppen, die für die Polyurethanacrylate dispergierend wirken,

E) ein oder mehrere organische Verbindungen mit 2 oder mehr Isocyanatgruppen,

F) gegebenenfalls Neutralisationsamine in Kombination mit Verbindungen D) oder F') Neutralisationssäuren F') in Kombination mit Verbindungen D'),

G) gegebenenfalls Urethanisierungskatalysatoren, sowie

gegebenenfalls weiteren Hilfs- und Zusatzstoffen.

Als Komponente A) geeignet sind die an sich bekannten hydroxyl-gruppenhaltigen Polyepoxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g. Bevorzugt werden aromatische, hydroxylgruppenhaltige Polyepoxy(meth)acrylate basierend auf Umsetzungsprodukten von Acrylsäure und / oder Methacrylsäure mit aromatischen Glycidylethern (Epoxiden) verwendet, besonders bevorzugt aromatische Gylcidylether von monomerem, oligomerem oder polymerem Bisphenol-A und/oder Bisphenol-F oder deren alkoxylierten Derivaten.

Die unter Komponente A) aufgezählten Verbindungen können für sich alleine oder auch in Mischungen verwendet werden.

Komponente B) besteht aus von Komponente A) verschiedenen Verbindungen mit mindestens einer gegenüber Isocyanat reaktive Gruppe und mindestens einer strahlenhärtbaren Doppelbindung

Komponente B) enthält bevorzugt monohydroxyfunktionelle, (Meth)acrylatgruppen-haltige Alkohole. Bei solchen monohydroxyfunktionellen, (Meth)acrylatgruppen-haltigen Alkoholen handelt es sich beispielsweise um 2-Hydroxyethyl(meth)acrylat, Caprolacton-verlängerten Modifikationen von 2-Hydroxyethyl(meth)acrylat, 2-Hydroxypropyl-(meth)acrylat, 4 Hydroxybutyl(meth)acrylat, 3-Hydroxy-2,2-dimethylpropyl(meth)-acrylat, die im Mittel monohydroxyfunktionellen Di-, Tri oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Besonders bevorzugt als monohydroxyfunktionelle, (Meth)acrylatgruppen-haltige Alkohole sind 2-Hydroxyethyl(meth)acrylat, 2-Hydroxypropyl(meth)acrylat, Pentaerythrittriacrylat, Dipentaerythrit-pentaacrylat und das Additionsprodukt aus Ethylmethylheptansäureglycidylester mit (Meth)acrylsäure sowie deren technische Gemische. Ganz besonders bevorzugt ist 2-Hydroxy-ethyl(meth)acrylat.

Außerdem können in Komponente B) auch Alkohole, die sich aus der Umsetzung von doppelbindungshaltigen Säuren mit gegebenenfalls doppelbindungshaltigen, monomeren Epoxidverbindungen erhalten lassen, als monohydroxyfunktionelle, (Meth)acrylatgruppen-haltige Alkohole eingesetzt werden.

Ferner kann die Komponente B) Hydroxylgruppen und ungesättigte Gruppen enthaltende Oligomere und Polymere enthalten. Bevorzugt sind Polyester(meth)acrylate.

Von den Polyester(meth)acrylaten werden als Komponente B) bevorzugt die hydroxylgruppenhaltigen Polyester(meth)acrylate mit einer OH-Zahl im Bereich von 15 bis 300 mg KOH/g Substanz, insbesondere bevorzugt von 60 bis 200 mg KOH/g Substanz eingesetzt.

Bevorzugt werden diese Polyester(meth)acrylate durch Umsetzung von b1) mehrfunktionellen Alkoholen von 62 bis 320 g/mol mit b2) Dicarbonsäuren sowie b3) Acrylsäure, Methacrylsäure und / oder dimerer Acrylsäure.

Besonders bevorzugt für b1) sind di-, tri- und tetrafunktionelle Alkohole wie Butandiol, Pentandiol, 1,6-Hexandiol, Neopentylglykol, Cyclohexandiol, 1,4-Cyclohexan-dimethanol, Diethylenglykol, Triethylenglykol, Tetraethylenglykol, Dipropylenglykol, Tripropylenglykol, Glycerin, Trimethylolpropan und Pentaerythrit. Sowie das Umsetzungsprodukt von 1 mol Trimethylolpropan mit 4 mol Ethylenoxid.

Besonders bevorzugt für b2) sind Dicarbonsäuren mit einem Molekulargewicht im Bereich von 104 bis 600 g/mol und / oder deren Anhydride, wie z.B. Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure. Ganz besonders bevorzugte Dicarbonsäuren sind aliphatische Dicarbonsäuren mit 4-8 C-Atomen, insbesondere Adipinsäure.

Besonders bevorzugt für b3) sind Acrylsäure und Methacrylsäure oder deren Gemische, insbesondere bevorzugt ist Acrylsäure.

Die als Komponente B) verwendbar beschriebenen monohydroxyfunktionellen, (Meth)acrylatgruppen-haltigen Alkohole sowie Hydroxylgruppen und ungesättigte Gruppen enthaltende Oligomere und Polymere können für sich alleine als auch als Mischungen verwendet werden.

Als Komponente C) können bevorzugt difunktionelle Amine, di- oder trifunktionelle Alkohole und hydroxyfunktionelle Polyesteralkohole eingesetzt werden. Dabei finden neben den unter b1) beschriebenen Alkoholen und ohne Verwendung von b3) durch Umsetzung aus b1) und b2) hergestellten Polyestern zur Erhöhung des Gewichtsmittel des Molekulargewichts Mw der Polyurethanacrylate auch in geringen Mengen (bevorzugt < 5 Gew.-%, besonders bevorzugt < 3,5 Gew.-%) Diamine Anwendung.

Besonders bevorzugt werden in Komponente C) als mehrfunktionelle Alkohole Neopentylglykol, 1,4-Butandiol, 1,4-Cyclohexan-dimethanol, 1,6-Hexandiol, 2-Ethyl-1,3-hexandiol, und/oder Trimethylolpropan eingesetzt. Als hydroxyfunktionelle Polyesteralkohole werden in Komponente C) bevorzugt Umsetzungsprodukte aus Phthalsäure, Phthalsäureanhydrid, Isophthalsäure und/oder aliphatischen Dicarbonsäuren mit 4-8 C-Atomen, insbesondere Adipinsäure, sowie 1,6-Hexandiol, 2-Ethyl-1,3-hexandiol, Butandiol, Ethylenglykol, Di- oder Triethylenglykol und/oder Neopentylglykol eingesetzt. Bei der Herstellung von hydroxyfunktionellen Polyestern kann es von besonderem Vorteil sein, Rizinusöl als hydroxyfunktionellen Baustein zu verwenden.

Als Amine werden in Komponente C) besonders bevorzugt aliphatische Diamine, insbesondere bevorzugt Ethylendiamin, 1,6-Hexamethylendiamin und/oder Isophorondiamin eingesetzt

Die unter Komponente C) aufgezählten Verbindungen können für sich alleine oder auch in Mischungen verwendet werden.

Als Komponente D) finden eine oder mehrere Verbindungen mit mindestens einer gegenüber Isocyanat reaktiven Gruppe und zusätzlich nichtionischen, anionischen oder zur Ausbildung von anionischen Gruppen befähigten Gruppen, die für die Polyurethanacrylate dispergierend wirken, Anwendung.

Zu den hydrophilierend wirkenden Gruppen gehören anionische Gruppen d1) und/oder solche, die aus potentiell anionischen Gruppen d2) hervorgehenden (beispielsweise durch Salzbildung) ionischen Gruppen d1), wie beispielsweise Sulfonium-, Phosphonium-, Carboxylat-, Sulfonat-und/oder Phosphonat-Gruppen. Bevorzugt geeignete isocyanatreaktive Gruppen sind Hydroxyl-und Aminogruppen.

Verbindungen enthaltend potentiell anionische Gruppen d2) umfassen Verbindungen wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren sowie Mono- und Diaminophosphonsäuren.

Bevorzugte Verbindungen enthaltend potentiell anionischen Gruppen d2) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylen-diamin-propyl- oder - butylsulfonsäure, 1,2- oder 1,3-Propylendiamin-ethylsulfonsäure, 3-(Cyclohexylamino)-propan-1-sulfonsäure, Äpfelsäure, Zitronensäure, Glykolsäure, Milchsäure, Glycin, Alanin, Taurin, Lysin, 3,5-Diaminobenzoesäure sowie ein Additionsprodukt von Isophorondiamin (1-Amino-3,3,5-trimethyl-5-aminomethylcyclohexan, IPDA) und Acrylsäure (EP-A 916 647, Beispiel 1).

Besonders bevorzugt enthält Komponente D) als Verbindungen mit potentiell anionischen Gruppen Hydroxypivalinsäure und/oder Dimethylolpropionsäure, insbesondere bevorzugt Dimethylolpropionsäure.

Ebenfalls gehören zur Komponente D) nichtionische Verbindungen, die für Polyurethanacrylate dispergierend wirken.

Nichtionische hydrophile Verbindungen d3) sind beispielsweise einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol. Diethylenglykol-monoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol sind ebenfalls geeignet.

Bevorzugte Startermoleküle sind gesättigte Monoalkohole sowie Diethylenglykol-monoalkylether. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder

gemischte Polyalkylenoxidpolyether, deren Alkylenoxideinheiten zu mindestens 30 mol-% bevorzugt zu mindestens 40 mol-% aus Ethylenoxideinheiten bestehen. Bevorzugte nichtionische hydrophile Verbindungen A4) sind monofunktionelle gemischte Polyalkylenoxidpolyether, die mindestens 40 mol-% Ethylenoxid- und maximal 60 mol-% Propylenoxideinheiten aufweisen.

Die unter Komponente D) aufgeführten Verbindungen können auch in Mischungen verwendet werden.

In Komponente D') können bevorzugt Verbindungen mit potentiell kationischen Gruppen wie beispielsweise, Triethanolamin, N-Methyl-diethanolamin und N,N-Dimethylethanolamin Anwendung finden. Selbstverständlich können auch Verbindungen kationischer Natur wie beispielsweise Verbindungen mit Ammonium-Gruppen, die über weitere, mit Isocyanatgruppen reaktive Komponenten aufweisen, verwendet werden. Besonders bevorzugt wird N-Methyl-diethanolamin verwendet.

Die ionische Hydrophilierung und die Kombination von ionischer und nicht-ionischer Hydrophilierung sind gegenüber der rein nicht-ionischen Hydrophilierung bevorzugt.

Die Komponente E) sind Polyisocyanate ausgewählt aus der Gruppe von aromatischen, araliphatischen, aliphatischen oder cycloaliphatischen Polyisocyanaten oder Mischungen solcher Polyisocyanate mit mindestens 2 Isocyanatgruppen pro Molekül. Geeignete Polyisocyanate sind beispielsweise 1,3-Cyclohexandi-isocyanat, 1-Methyl-2,4-diisocyanato-cyclohexan, 1-Methyl-2,6-diisocyanato-cyclohexan, Tetramethylen-diisocyanat, 4,4'-Diisocyanatodiphenylmethan, 2,4'-Diisocyanato-diphenylmethan, 2,4-Diisocyanatotoluol, 2,6-Diisocyanatotoluol, $\alpha,\alpha,\alpha',\alpha'$,-Tetra-methyl-m- oder p-Xylylendiisocyanat, 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, 1,3-Bis(isocyanato-methyl)benzol (XDI), 1,3-Bis(1-isocyanato-1-methylethyl)-benzol (TMXDI), 4-Isocyanatomethyl-1,8-octan-diisocyanat (Triisocyanatononan, TIN) (EP-A 928 799), Homologe bzw. Oligomere dieser aufgezählten Polyisocyanate mit Biuret-, Carbodiimid , Isocyanurat-, Allophanat-, Iminooxadiazindion- und / oder Uretdiongruppen, und deren Mischungen.

Bevorzugt sind aliphatische und cycloaliphatische Isocyanate. Besonders bevorzugt sind 1,6-Hexamethylendiisocyanat, 1-Isocyanato-3,3,5-trimethyl-5-isocyanato-methylcyclohexan (Isophorondiisocyanat oder IPDI) und 4,4'-Diisocyanato-dicyclohexylmethan sowie Homologe bzw. Oligomere von Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Imino-oxadiazindion-und/oder Uretdiongruppen und deren Mischungen.

Die unter Komponente E) aufgezählten Verbindungen können für sich alleine oder auch in Mischungen verwendet werden.

Die unter Komponente D genannten Säuren werden gegebenenfalls bei durch Umsetzung mit Neutralisationsaminen (Komponente F), typischerweise, aber nicht ausschließlich tertiäre Amine, bevorzugt Triethylamin, Ethyldiisopropylamin, Dimethylcyclohexylamin, Dimethylethanolamin, Methyldiethanolamin, Triethanolamin, Diethanolamin, N-Butyldiethanolamin, Ammoniak und / oder N-Ethylmorpholin in die entsprechenden Salze überführt. Der Neutralisationsgrad liegt dabei bevorzugt zwischen 50 und 125%.

Die unter Komponente D') genannten Basen werden durch Umsetzung mit Neutralisationsmitteln F'), wie z. B. anorganische Säuren, wie beispielsweise Salzsäure, Phosphorsäure und/oder Schwefelsäure, und/oder bevorzugt organischen Säuren, wie beispielsweise Ameisensäure, Essigsäure, Milchsäure, Methan-, Ethan- und/oder p-Toluolsulfonsäure, in die entsprechenden Salze überführt. Besonders bevorzugt werden Essigsäure, Milchsäure und Phosphorsäure verwendet. Insbesondere bevorzugt ist Milchsäure. Der Neutralisationsgrad liegt dabei bevorzugt zwischen 50 und 125 %.

Als Verbindungen der Komponente G) können gegebenenfalls ein oder mehrere Katalysatoren eingesetzt werden. Dabei handelt es sich um Katalysatoren zur Beschleunigung der Urethanbildung. Bekannte Katalysatoren hierfür sind beispielsweise Zinnoctoat, Zinndioctoat, Zinkdioctoat, Dibutylzinndilaurat, Dimethylbis[(1-oxoneodecyl)oxy]stannan, Dimethylzinndicarboxylat, Zirkonium-bis(ethyl-hexanoat), Zirconium-acteylacetonat oder tertiäre Aminen wie beispielsweise 1,4-Diazabi-cyclo[2.2.2]octan, Diazabicyclononan, Diazabicycloundecan, 1,1,3,3-Tetramethylguanidin, 1,3,4,6,7,8-Hexahydro-1-methyl-2H-pyrimido(1,2-a)pyrimidin.

Bevorzugt sind Dibutylzinndilaurat, Zinndioctoat, Dimethylbis[(1-oxoneodecyl)oxy]stannan, Dimethylzinndicarboxylat.

Selbstverständlich können gegebenenfalls weitere Zusatzstoffe eingesetzt werden. Dabei kann es sich beispielsweise um im Bereich der Lacktechnologie gängige Zusatzstoffe wie Lösemittel, Weichmacher, Verlaufsmittel, Entschäumungsmittel, Stabilisatoren oder Haftvermittler handeln. Als Verlaufsmittel können oberflächenaktive Verbindungen wie z.B. Polydimethylsiloxane verwendet werden. Es kann auch von Vorteil sein, gleichzeitig mehrere Zusatzstoffe eines Typs zu verwenden. Selbstverständlich kann es ebenfalls von Vorteil sein, mehrere Zusatzstoffe mehrerer Typen zu verwenden.

Komponente A) und gegebenenfalls Komponenten B) und (ii) werden dabei in solchen Mengen eingesetzt, dass der Gehalt an strahlenhärtbaren Doppelbindungen zwischen 0,5 und 6,0, bevorzugt zwischen 1,0 und 5,0, besonders bevorzugt zwischen 1,4 und 3,0 mol/kg nicht wässriger Bestandteile der Dispersion beträgt.

Optional enthält die vorgenannte Polyurethandispersion eine weitere Komponente, wobei es sich um Reaktivverdünner, die mindestens eine radikalisch polymerisierbare Gruppe aufweisen und allenfalls zum Teil über optional vorhandene, einbaufähige OH-Gruppen an das Polyurethanacrylat gebunden ist, ansonsten bevorzugt als ungebundenes Monomer vorliegt, handelt.

In einer bevorzugten Ausführungsform ist als strahlenhärtbarer Bestandteil nur Komponente A) (Polyepoxyacrylate) vorhanden. Die Komponente A) wird insbesondere dann vorzugsweise aus aromatischen oder aliphatischen Polyepoxy(meth)acrylaten, Polyester(meth)acrylaten, Polyepoxy(meth)acrylaten, mono- oder dihydroxyfunktionellen (Meth)acrylatgruppen-haltigen Verbindungen oder Mischungen von diesen ausgewählt, bevorzugt aus Polyepoxy(meth)acrylaten, insbesondere bevorzugt aus aromatischen Polyepoxy(meth)acrylaten.

"(Meth)acrylat" bezieht sich im Rahmen dieser Schrift auf entsprechende Acrylat- oder Methacrylatfunktionen oder auf eine Mischung beider.

In bevorzugter Ausgestaltung beträgt der Anteil nicht polymergebundener strahlenhärtbarer Verbindungen < 10 Gew.-% bezogen auf den Feststoffanteil des erzeugten Polyurethanacrylats, besonders bevorzugt < 5 Gew.-%, wobei die nicht polymergebundenen strahlenhärtbaren Verbindungen insbesondere als Acrylate mit zwei oder mehr C-C Doppelbindungen vorliegen.

Es ist weiter bevorzugt, dass der Anteil Isocyanatgruppen-haltiger Verbindungen > 10 Gew.-% bezogen auf den Feststoffanteil des erzeugten Polyurethanacrylats beträgt, besonders bevorzugt > 20 Gew.-%.

Bevorzugt ist es ebenfalls, wenn für die Herstellung der Dispersionen folgende Kombination von Merkmalen gewählt wird:

- Polymergebundene strahlenhärtbare Gruppen, besonders bevorzugt Polyester(meth)acrylate, Polyepoxy(meth)acrylaten, Polyether(meth)acrylaten, insbesondere bevorzugt Polyepoxy(meth)acrylaten und/ oder

- Polymergebundene strahlenhärtbare Gruppen, durch Umsetzung von einer oder mehrerer Verbindungen mono- oder dihydroxyfunktioneller, (Meth)acrylatgruppen-haltiger Alkohole mit Verbindungen mit mindestens einer gegenüber Isocyanat reaktiven Gruppe, besonders bevorzugt sind aliphatische Verbindungen und

- hoher Anteil an Verbindungen der Komponente E), bevorzugt > 10%, besonders bevorzugt > 20% als Summe aller NCO-haltigen Einsatzstoffe

Die vorliegende Erfindung betrifft ferner ein Verfahren zur Erzeugung eines Schichtaufbaus nach einem der Ansprüche 1 bis 11 umfassend die Schritte:

Bereitstellen einer belichteten Photopolymerschicht,

Aufbringen einer strahlenhärtbaren wässrigen Polymerdispersion, insbesondere einer strahlenhärtbaren wässrigen Polyurethandispersion auf die Photopolymerschicht

Trocknen der aufgebrachten Polymerdispersion und

Strahlenhärten der Polymerdispersion zur Ausbildung der Schutzschicht.

Nach einer Weiterbildung des erfindungsgemäßen Verfahrens wird die Polymerdispersion durch Rakeln, Gießen, Drucken, Siebdruck, Spritzen, oder Inkjet-Druck, insbesondere Auftragen mittels Spritzen, Siebdruck, Kastenrakel, Spiralrakel oder Filmaufziehgerät appliziert.

Geeignete Photopolymer-Formulierungen für die Herstellung der Photopolymerschicht sind dem Fachmann ebenfalls bekannt und beispielsweise in WO-A 2011/054797 und WO 2011/067057 beschrieben. Bevorzugt handelt es sich bei der Photopolymer-Formulierung für die Herstellung der Photopolymerschicht um eine solche umfassend eine Polyisocyanat-Komponente, eine isocyanatreaktive Komponente, wenigstens ein Schreibmonomer und wenigstens einen Photoinitiator.

Die Polyisocyanat-Komponente H) umfasst wenigstens eine organische Verbindung, die wenigstens zwei NCO-Gruppen aufweist. Als Polyisocyanat können alle dem Fachmann an sich bekannten Verbindungen oder deren Mischungen eingesetzt werden. Diese Verbindungen können auf aromatischer, araliphatischer, aliphatischer oder cycloaliphatischer Basis sein. In untergeordneten Mengen kann die Polyisocyanat-Komponente H) auch Monoisocyanate, d.h. organische Verbindungen mit einer NCO-Gruppe, und / oder ungesättigte Gruppen enthaltende Polyisocyanate umfassen.

Beispiele für geeignete Polyisocyanate sind Butylendiisocyanat, Hexamethylendiisocyanat (HDI), 2,2,4-Trimethylhexamethylendiisocyanat und dessen Isomere (TMDI), Isophorondiisocyanat (IPDI), 1,8-Diisocyanato-4-(isocyanatomethyl)-octan, die isomeren Bis-(4,4'-isocyanatocyclo-hexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und / oder 2,6-Toluylendiisocyanat, 1,5-Naphthylendiisocyanat, 2,4'- und / oder 4,4'-Diphenylmethandiisocyanat, Triphenylmethan-4,4',4"-triisocyanat oder beliebige Mischungen der vorgenannten Verbindungen.

Monomere Di- oder Triisocyanate mit Urethan-, Harnstoff-, Carbodiimid-, Acylharnstoff-, Isocyanurat-, Allophanat-, Biuret-, Oxadiazintrion-, Uretdion- und/oder Iminooxadiazindionstrukturen können ebenfalls verwendet werden.

Bevorzugt sind Polyisocyanate auf Basis aliphatischer und / oder cycloaliphatischer Di- oder Triisocyanate. Besonders bevorzugt handelt es sich bei den Polyisocyanaten um di- oder oligomerisierte aliphatische und / oder cycloaliphatische Di- oder Triisocyanate. Ganz besonders bevorzugte Polyisocyanate sind Isocyanurate, Uretdione und / oder Iminooxadiazindione basierend auf HDI, TMDI, 1,8-Diisocyanato-4-(isocyanatomethyl)-octan oder deren Mischungen.

Die Polyisocyanat-Komponente H) kann auch NCO-funktionelle Prepolymere umfassen oder daraus bestehen. Die Prepolymere können Urethan-, Allophanat-, Biuret- und / oder Amidgruppen aufweisen. Derartige Prepolymere sind beispielsweise durch Umsetzung von Polyisocyanaten h1) mit isocyanatreaktiven Verbindungen h2) erhältlich.

Als Polyisocyanate h1) eignen sich alle bekannten aliphatischen, cycloaliphatischen, aromatischen oder araliphatischen Di- und Triisocyanat. Daneben können auch die bekannten höhermolekularen Folgeprodukte monomerer Di- und / oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden.

Beispiele für geeignete monomere Di- oder Triisocyanate, die als Polyisocyanat h1) eingesetzt werden können, sind Butylendiisocyanat, Hexamethylendiisocyanat, Isophorondiisocyanat, Trimethyl-hexamethylen-diisocyanat (TMDI), 1,8-Diisocyanato-4-(isocyanatomethyl)-octan, Isocyanatomethyl-1,8-octandiisocyanat (TIN), 2,4- und / oder 2,6-Toluendiisocyanat.

Als isocyanatreaktive Verbindungen h2) können bevorzugt OH-funktionelle Verbindungen verwendet werden. Dabei kann es sich insbesondere um Polyole handeln. Ganz besonders bevorzugt können als isocyanatreaktive Verbindung h2) die weiter unten beschriebenen Polyole der Komponente K) verwendet werden.

Es ist ebenfalls möglich, als isocyanatreaktive Verbindungen h2) Amine einzusetzen. Beispiele geeigneter Amine sind Ethylendiamin, Diethylentriamin, Triethylentetramin, Propylendiamin, Diaminocyclohexan, Diaminobenzol, Diaminobisphenyl, difunktionelle Polyamine wie z.B. die Jeffamine®, aminterminierte Polymere, insbesondere mit zahlenmittleren Molmassen bis 10000 g/Mol. Mischungen der vorgenannten Amine können ebenfalls verwendet werden.

Bevorzugt ist auch, wenn die isocyanatreaktiven Verbindungen h2) eine zahlenmittlere Molmasse von $\geq 200$ und $\leq 10000$ g/Mol, weiter bevorzugt $\geq 500$ und $\leq 8500$ g/Mol und ganz besonders bevorzugt $\geq 1000$ und $\leq 8200$ g/Mol aufweisen.

Die Prepolymere der Polyisocyanat-Komponente H) können insbesondere einen Restgehalt an freiem monomerem Isocyanat < 1 Gew.-%, besonders bevorzugt < 0,5 Gew.-% und ganz besonders bevorzugt < 0,2 Gew.-% aufweisen.

Die Polyisocyanat-Komponente H) kann auch Mischungen der vorgenannten Polyisocyanate und Prepolymere umfassen.

Es ist gegebenenfalls auch möglich, dass die Polyisocyanat-Komponente H) anteilsmäßig Polyisocyanate enthält, die teilweise mit isocyanat-reaktiven, ethylenisch ungesättigten Verbindungen umgesetzt sind. Bevorzugt werden hierbei als isocyanat-reaktive, ethylenisch ungesättigte Verbindungen $\alpha,\beta$-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt. Besonders bevorzugt sind Acrylate und Methacrylate mit mindestens einer isocyanatreaktiven Gruppe.

Der Anteil der Polyisocyanate in der Polyisocyanat-Komponente H), der teilweise mit isocyanat-reaktiven, ethylenisch ungesättigten Verbindungen umgesetzt ist, kann 0 bis 99 Gew.-%, bevorzugt 0 bis 50 Gew.-%, besonders bevorzugt 0 bis 25 Gew.-% und ganz besonders bevorzugt 0 bis 15 Gew.-% betragen.

Es ist gegebenenfalls auch möglich, dass die Polyisocyanat-Komponente H) vollständig oder anteilsmäßig Polyisocyanate enthält, die ganz oder teilweise mit aus der Beschichtungstechnologie bekannten Blockierungsmitteln umgesetzt sind. Beispiel für Blockierungsmittel sind Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, $\varepsilon$-caprolactam, N-tert.-Butyl-benzylamin, Cyclopentanoncarboxyethylester oder deren Mischungen.

Besonders bevorzugt ist, wenn die Polyisocyanat-Komponente H) ein aliphatisches Polyisocyanat oder ein aliphatisches Prepolymer und bevorzugt ein aliphatisches Polyisocyanat oder aliphatisches Prepolymer mit primären NCO-Gruppen umfasst oder daraus besteht.

Die isocyanatreaktive Komponente K) umfasst wenigstens eine organische Verbindung, die wenigstens zwei isocyanatreaktive Gruppen aufweist (isocyanatreaktive Verbindung). Im Rahmen der vorliegenden Erfindung werden als isocyanatreaktive Gruppen Hydroxy-, Amino- oder Thiogruppen angesehen.

Als isocyanatreaktive Komponente können alle Systeme eingesetzt werden, die im Mittel wenigstens 1,5 und bevorzugt mindestens 2, besonders bevorzugt 2 bis 3 isocyanatreaktive Gruppen aufweisen.

Geeignete isocyanatreaktive Verbindungen sind beispielsweise Polyester-, Polyether-, Polycarbonat-, Poly(meth)acrylat- und / oder Polyurethanpolyole.

Besonders geeignete Polyesterpolyole sind beispielsweise lineare oder verzweigte Polyesterpolyole, die aus aliphatischen, cycloaliphatischen oder aromatischen Di- bzw. Polycarbonsäuren bzw. ihren Anhydriden durch Umsetzung mit mehrwertigen Alkoholen einer OH-Funktionalität $\geq$ 2 erhältlich sind.

Die Polyesterpolyole können auch auf natürlichen Rohstoffen wie Rizinusöl basieren. Ebenfalls möglich ist, dass die Polyesterpolyole auf Homo- oder Mischpolymerisaten von Lactonen basieren. Diese können bevorzugt durch Anlagerung von Lactonen bzw. Lactongemischen wie Butyrolacton, $\varepsilon$-Caprolacton und / oder Methyl-$\varepsilon$-caprolacton an hydroxyfunktionelle Verbindungen wie mehrwertige Alkohole einer OH-Funktionalität $\geq$ 2, beispielsweise der vorstehend genannten Art, erhalten werden.

Die Polyesterpolyole haben bevorzugt zahlenmittlere Molmassen von $\geq$ 400 und $\leq$ 4000 g/Mol, besonders bevorzugt von $\geq$ 500 und $\leq$ 2000 g/Mol.

Die OH-Funktionalität der Polyesterpolyole beträgt bevorzugt 1,5 bis 3,5, besonders bevorzugt 1,8 bis 3,0.

Beispiele zur Herstellung der Polyester besonders geeigneter Di- bzw. Polycarbonsäuren bzw. Anhydride sind Bernstein-, Glutar-, Adipin-, Pimelin-, Kork-, Azelain-, Sebacin-, Nonandicarbon-, Decandicarbon-, Terephthal-, Isophthal-, o-Phthal-, Tetrahydrophthal-, Hexahydrophthal- oder Trimellitsäure sowie Säureanhydride wie o-Phthal-, Trimellit- oder Bernsteinsäureanhydrid oder Mischungen daraus.

Besonders zur Herstellung der Polyester geeignete Alkohole sind beispielsweise Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12, Trimethylolpropan, Glycerin oder Mischungen daraus.

Geeignete Polycarbonatpolyole sind in an sich bekannter Weise durch Umsetzung von organischen Carbonaten oder Phosgen mit Diolen oder Diol-Mischungen zugänglich.

Hierfür geeignete organische Carbonate sind beispielsweise Dimethyl-, Diethyl- und Diphenylcarbonat.

Geeignete mehrwertige Alkohole umfassen die oben im Rahmen der Diskussion der Polyesterpolyole genannten mehrwertigen Alkoholen einer OH-Funktionalität $\geq$ 2. Bevorzugt können 1,4-Butandiol, 1,6-Hexandiol und / oder 3-Methylpentandiol eingesetzt werden.

Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Die Polycarbonatpolyole haben bevorzugt zahlenmittlere Molmassen von $\geq$ 400 und $\leq$ 4000 g/Mol, besonders bevorzugt von $\geq$ 500 und $\leq$ 2000 g/Mol.

Die OH-Funktionalität der Polycarbonatpolyole beträgt bevorzugt 1,8 bis 3,2, besonders bevorzugt 1,9 bis 3,0.

Geeignete Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität $\geq$ 2 sowie primäre oder sekundäre Amine und Aminoalkohole verwendet werden.

Bevorzugte Polyetherpolyole sind solche der vorgenannten Art, die ausschließlich auf Propylenoxid basieren. Bevorzugt sind ebenfalls Polyetherpolyole der vorgenannten Art, die statistische Copolymere oder Block-Copolymere, basierend auf Propylenoxid mit weiteren 1-Alkylenoxiden, sind, wobei der 1-Alkylenoxidanteil insbesondere nicht höher als 80 Gew.-% ist. Ganz besonders bevorzugt sind Propylenoxid-Homopolymere sowie statistische Copolymere oder Block-Copolymere, die Oxyethylen-, Oxypropylen- und / oder Oxybutyleneinheiten aufweisen, wobei der Anteil der Oxypropyleneinheiten bezogen auf die Gesamtmenge aller Oxyethylen-, Oxypropylen- und Oxybutyleneinheiten insbesondere $\geq$ 20 Gew.-%, bevorzugt $\geq$ 45 Gew.-% ist. Oxypropylen- und Oxybutylen umfasst hierbei alle linearen und verzweigten C3- und C4-Isomere.

Die Polyetherpolyole haben bevorzugt zahlenmittlere Molmassen von $\geq$ 250 und $\leq$ 10000 g/Mol, besonders bevorzugt von $\geq$ 500 und $\leq$ 8500 g/Mol und ganz besonders bevorzugt von $\geq$ 600 und $\leq$ 4500 g/Mol. Ihre OH-Funktionalität beträgt bevorzugt 1,5 bis 4,0 und besonders bevorzugt 1,8 bis 3,1.

Weitere bevorzugte Polyetherpolyole bestehen aus einer isocyanatreaktiven Komponente umfassend hydroxyfunktionelle Multiblockcopolymere des Typs $Y(X_i\text{-}H)n$ mit i = 1 bis 10 und n = 2 bis 8, wobei die Segmente $X_i$ jeweils aus Oxyalkyleneinheiten der Formel (I)

$$-CH_2\text{-}CH(R)\text{-}O- \qquad (I)$$

aufgebaut sind, in der R ein Alkyl- oder ein Arylrest, ist, der auch substituiert oder durch Heteroatome (wie Ethersauerstoffe) unterbrochen sein kann oder Wasserstoff und Y der zugrundeliegende Starter ist.

Der Rest R kann bevorzugt ein Wasserstoff-, Methyl-, Butyl-, Hexyl-, Octyl- oder ein ethergruppenhaltiger Alkylrest sein. Bevorzugte ethergruppenhaltiger Alkylreste basieren auf Oxyalkyleneinheiten.

Bevorzugt ist n eine ganze Zahl von 2 bis 6, besonders bevorzugt 2 oder 3 und ganz besonders bevorzugt gleich 2.

Bevorzugt ist ebenfalls, wenn i eine ganze Zahl von 1 bis 6, besonders bevorzugt von 1 bis 3 und ganz besonders bevorzugt gleich 1 ist.

Weiter bevorzugt ist, wenn der Anteil der Segmente X;, bezogen auf die Gesamtmenge der Segmente $X_i$ und Y, > 50 Gew.-% und bevorzugt $\geq$ 66 Gew.-% ist.

Bevorzugt ist auch, wenn der Anteil der Segmente Y, bezogen auf die Gesamtmenge der Segmente $X_i$ und Y, < 50 Gew.-% und bevorzugt < 34 Gew.-% ist.

Die Multiblockcopolymere $Y(X_i\text{-}H)_n$ haben bevorzugt zahlenmittlere Molekulargewichte von > 1200 g/Mol, besonders bevorzugt > 1950 g/Mol, jedoch bevorzugt < 12000 g/Mol, besonders bevorzugt < 8000 g/Mol.

Die Blöcke $X_i$ können Homopolymere sein, die ausschließlich aus gleichen Oxyalkylen-Wiederholungseinheiten bestehen. Sie können auch statistisch aus verschiedenen Oxyalkyleneinheiten oder ihrerseits blockweise aus verschiedenen Oxyalkyleneinheiten aufgebaut sein.

Bevorzugte basieren die Segmente X; ausschließlich auf Propylenoxid oder statistischen oder blockweisen Mischungen von Propylenoxid mit weiteren 1-Alkylenoxiden, wobei der Anteil an weiteren 1-Alkylenoxiden bevorzugt nicht > 80 Gew.-% ist.

Besonders bevorzugte Segmente X; sind Propylenoxid-Homopolymere sowie statistische Copolymere oder Block-Copolymere, die Oxyethylen- und / oder Oxypropyleneinheiten aufweisen. Ganz besonders bevorzugt beträgt in diesem Fall der Anteil der Oxypropyleneinheiten, bezogen auf die Gesamtmenge aller Oxyethylen- und Oxypropyleneinheiten, $\geq$ 20 Gew.-% und noch weiter bevorzugt $\geq$ 40 Gew.-%.

Die Blöcke X; können durch ringöffnende Polymerisation der vorstehend beschriebenen Alkylenoxide auf einen n-fach hydroxy- oder aminofunktionellen Starter $Y(H)_n$ aufaddiert werden.

Der Starter $Y(H)_n$ kann aus di- und / oder höher hydroxyfunktionellen Polymerstrukturen auf Basis cyclischer Ether oder aus di- und / oder höher hydroxyfunktionellen Polycarbonat-, Polyester-, Poly(meth)acrylat-, Epoxydharz- und / oder Polyurethanstruktureinheiten oder entsprechenden Hybriden bestehen.

Beispiele für geeignete Starter $Y(H)_n$ sind die oben genannten Polyester-, Polycarbonat- und Polyetherpolyole.

Die Polyesterpolyole haben bevorzugt zahlenmittlere Molmassen von 200 bis 2000 g/Mol, besonders bevorzugt von 400 bis 1400 g/Mol.

Die Polycarbonatpolyole haben bevorzugt zahlenmittlere Molmassen von 400 bis 2000 g/Mol, besonders bevorzugt von 500 bis 1400 g/Mol und ganz besonders bevorzugt von 650 bis 1000 g/Mol.

Die Polyetherpolyole haben bevorzugt zahlenmittlere Molmassen von 200 bis 2000 g/Mol, besonders bevorzugt von 400 bis 1400 g/Mol und ganz besonders bevorzugt von 650 bis 1000 g/Mol.

Besonders bevorzugte Starter $Y(H)_n$ sind insbesondere difunktionelle Polymere des Tetrahydrofuran, insbesondere difunktionelle aliphatische Polycarbonatpolyole und Polyesterpolyole sowie Polymere des $\varepsilon$-Caprolacton insbesondere mit zahlenmittleren Molmassen < 3100 g/Mol, bevorzugt $\geq$ 500 g/mol und $\leq$ 2100 g/mol.

Weitere Beispiele geeigneter Polyether und Verfahren zu deren Herstellung sind in der EP 2 172 503 A1 beschrieben, auf deren diesbezügliche Offenbarung hiermit Bezug genommen wird.

Bei einer weiteren bevorzugten Ausführungsform ist vorgesehen, dass das Schreibmonomer wenigstens ein mono- und / oder ein multifunktionales Schreibmonomer umfasst, wobei es sich insbesondere um mono- und multifunktionelle Acrylat-Schreibmonomere handeln kann. Besonders bevorzugt kann das Schreibmonomer wenigstens ein monofunktionelles und ein multifunktionelles Urethan(meth)acrylat umfassen.

Bei den Acrylat-Schreibmonomeren kann es sich insbesondere um Verbindungen der allgemeinen Formel (II)

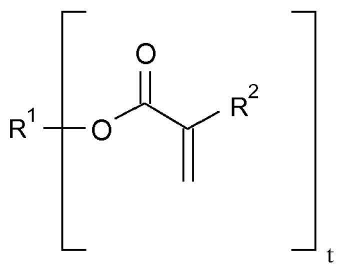

(II)

handeln, bei denen t≥1 und t≤4 ist und $R^1$ ein linearer, verzweigter, cyclischer oder heterocyclischer unsubstituierter oder gegebenenfalls auch mit Heteroatomen substituierter organischer Rest und/oder $R^2$ Wasserstoff, ein linearer, verzweigter, cyclischer oder heterocyclischer unsubstituierter oder gegebenenfalls auch mit Heteroatomen substituierter organischer Rest ist. Besonders bevorzugt ist $R^2$ Wasserstoff oder Methyl und/oder $R^1$ ein linearer, verzweigter, cyclischer oder heterocyclischer unsubstituierter oder gegebenenfalls auch mit Heteroatomen substituierter organischer Rest.

Ebenso ist es möglich, dass weitere ungesättigte Verbindungen wie α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen sowie olefinisch ungesättigte Verbindungen wie z.B. Styrol, α-Methylstyrol, Vinyltoluol, Olefinine, wie z.B. 1-Octen und/oder 1-Decen, Vinylestern, (Meth)acrylnitril, (Meth)acrylamid, Methacrylsäure, Acrylsäure zugesetzt werden. Bevorzugt sind aber Acrylate und Methacrylate.

Als Acrylate bzw. Methacrylate werden allgemein Ester der Acrylsäure bzw. Methacrylsäure bezeichnet. Beispiele verwendbarer Acrylate und Methacrylate sind Methylacrylat, Methylmethacrylat, Ethylacrylat, Ethylmethacrylat, Ethoxyethylacrylat, Ethoxyethylmethacrylat, n-Butylacrylat, n-Butylmethacrylat, tert.-Butylacrylat, tert.-Butylmethacrylat, Hexylacrylat, Hexylmethacrylat, 2-Ethylhexylacrylat, 2-Ethylhexylmethacrylat, Butoxyethylacrylat, Butoxyethylmethacrylat, Laurylacrylat, Laurylmethacrylat, Isobornylacrylat, Isobornylmethacrylat, Phenylacrylat, Phenylmethacrylat, p-Chlorphenylacrylat, p-Chlorphenylmethacrylat, p-Bromphenylacrylat, p-Bromphenyl-methacrylat, 2,4,6-Trichlorphenylacrylat, 2,4,6-Trichlorphenylmeth-acrylat, 2,4,6-Tribromphenyl-acrylat, 2,4,6-Tribromphenylmethacrylat, Pentachlorphenylacrylat, Pentachlorphenylmethacrylat, Pentabromphenylacrylat, Pentabromphenylmethacrylat, Pentabrombenzylacrylat, Pentabrombenzylmethacrylat, Phenoxyethylacrylat, Phenoxyethylmethacrylat, Phenoxyethoxyethylacrylat, Phenoxyethoxyethylmethacrylat, Phenylthioethylacrylat, Phenylthioethylmethacrylat, 2-Naphthylacrylat, 2-Naphthylmethacrylat, 1,4-Bis-(2-thionaphthyl)-2-butylacrylat, 1,4-Bis-(2-thionaphthyl)-2-butylmethacrylat, Propan-2,2-diylbis[(2,6-dibrom-4,1-phenyl-en)oxy(2-{[3,3,3-tris(4-chlorphenyl)-propanoyl]-oxy}propan-3,1-diyl)oxyethan-2,1-diyl]-diacrylat, Bisphenol A Diacrylat, Bisphenol A Dimethacrylat, Tetrabromobisphenol A Diacrylat, Tetrabromobisphenol A Dimethacrylat sowie deren ethoxylierte Analogverbindungen, N-Carbazolylacrylate, um nur eine Auswahl verwendbarer Acrylate und Methacrylate zu nennen.

Selbstverständlich können als Acrylate auch Urethanacrylate verwendet werden. Unter Urethanacrylaten versteht man Verbindungen mit mindestens einer Acrylsäureestergruppe, die zusätzlich über mindestens eine Urethanbindung verfügen. Es ist bekannt, dass solche Verbindungen durch Umsetzung eines Hydroxy-funktionellen Acrylsäureesters mit einer Isocyanat-funktionellen Verbindung erhalten werden können.

Beispiele hierfür verwendbarer Isocyanat-funktionelle Verbindungen sind aromatische, araliphatische, aliphatische und cycloaliphatische Di-, Tri- oder Polyisocyanate. Es können auch Mischungen solcher Di-, Tri- oder Polyisocyanate eingesetzt werden. Beispiele geeigneter Di-, Tri-oder Polyisocyanate sind Butylendiisocyanat, Hexamethylendiisocyanat (HDI), Isophorondiisocyanat (IPDI), 1,8-Diisocyanato-4-(isocyanatomethyl)octan, 2,2,4- und/oder 2,4,4-Trimethylhexamethylendiisocyanat, die isomeren Bis(4,4'-isocyanatocyclohexyl)methane und deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, 1,5-Naphthylendiisocyanat, m-Methylthiophenylisocyanat, Triphenylmethan-4,4',4"-triisocyanat und Tris(p-isocyanatophenyl)thiophosphat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind dabei aromatische oder araliphatische Di-, Tri- oder Polyisocyanate.

Als hydroxyfunktionelle Acrylate oder Methacrylate für die Herstellung von Urethanacrylaten kommen beispielsweise Verbindungen in Betracht wie 2-Hydroxyethyl(meth)acrylat, Polyethylenoxid-mono(meth)acrylate, Polypropylenoxidmono(meth)acrylate, Polyalkylenoxidmono(meth)-acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl-(meth)acrylat, Hydroxypropyl(meth)acrylat, Acrylsäure-(2-hydroxy-3-phenoxy-propylester), die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Bevorzugt sind 2-Hydroxyethylacrylat, Hydroxypropylacrylat, 4-Hydroxybutylacrylat und Poly(ε-caprolacton)mono(meth)acrylate.

Darüber hinaus sind als isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Ebenfalls verwendet werden können die an sich bekannten hydroxylgruppenhaltigen Epoxy(meth)acrylate mit OH-Gehalten von 20 bis 300 mg KOH/g oder hydroxylgruppenhaltige Polyurethan(meth)acrylate mit OH-Gehalten von 20 bis 300 mg KOH/g oder acrylierte Polyacrylate mit OH-Gehalten von 20 bis 300 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten.

Bevorzugt sind insbesondere Urethanacrylate erhältlich aus der Umsetzung von Tris(p-isocyanatophenyl)thiophosphat und m-Methylthiophenylisocyanat mit alkoholfunktionellen Acrylaten wie Hydroxyethyl(meth)acrylat, Hydroxypropyl(meth)acrylat und Hydroxybutyl(meth)-acrylat.

Besonders bevorzugt ist eine Kombination aus Komponenten H) und K) bei der Herstellung der Matrixpolymere bestehend aus Additionsprodukten von Butyrolacton, e-Caprolacton und/oder Methyl-ε-caprolacton an Polyetherpolyolen einer Funktionalität von 1,8 bis 3,1 mit zahlenmittleren Molmassen von 200 bis 4000 g/mol in Verbindung mit Isocyanuraten, Uretdionen, Iminooxadiazindionen und/oder anderen Oligomeren basierend auf HDI. Ganz besonders bevorzugt sind Additionsprodukte von e-Caprolacton an Poly(tetrahydrofurane) mit einer Funktionalität von 1,9 bis 2,2 und zahlenmittleren Molmassen von 500 bis 2000 g/mol (insbesondere 600 bis 1400 g/mol), deren zahlenmittlere Gesamtmolmasse von 800 bis 4500 g/Mol, insbesondere von 1000 bis 3000 g/Mol liegt in Verbindung mit Oligomeren, Isocyanuraten und/oder Iminooxadiazindionen basierend auf HDI.

Gemäß einer weiteren bevorzugten Ausführungsform ist vorgesehen, dass die Photopolymer-Formulierung zusätzlich Urethane als Additive enthält, wobei die Urethane insbesondere mit wenigstens einem Fluoratom substituiert sein können.

Bevorzugt können die Urethane die allgemeine Formel (III)

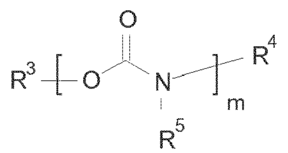

(III)

haben, in der m≥1 und m≤8 ist und $R^3$ ein linearer, verzweigter, cyclischer oder heterocyclischer unsubstituierter oder gegebenenfalls auch mit Heteroatomen substituierter organischer Rest und/oder $R^4$, $R^5$ unabhängig voneinander Wasserstoff sind, wobei bevorzugt mindestens einer der Reste $R^3$, $R^4$, $R^5$ mit wenigstens einem Fluoratom substituiert ist und besonders bevorzugt $R^3$ ein organischer Rest mit mindestens einem Fluoratom ist. Besonders bevorzugt ist $R^5$ ein linearer, verzweigter, cyclischer oder heterocyclischer unsubstituierter oder gegebenenfalls auch mit Heteroatomen wie beispielsweise Fluor substituierter organischer Rest.

Die eingesetzten Photoinitiatoren sind üblicherweise durch aktinische Strahlung aktivierbare Verbindungen, die eine Polymerisation der entsprechender Gruppen auslösen können.

Geeignete Photoinitiatoren sind üblicherweise durch aktinische Strahlung aktivierbare Verbindungen, die eine Polymerisation der entsprechender Gruppen auslösen können. Bei den Photoinitiatoren kann zwischen unimolekularen (Typ I) und bimolekularen (Typ II) Initiatoren unterschieden werden. Des Weiteren werden sie je nach ihrer chemischen Natur in Photoinitiatoren für radikalische, anionische, kationische oder gemischte Art der Polymerisation unterschieden, hier zu existiert ein breiter Stand der Technik.

Typ I-Photoinitiatoren (Norrish-Typ-I) für die radikalische Photopolymerisation bilden beim Bestrahlen durch eine unimolekulare Bindungsspaltung freie Radikale.

Beispiele für Typ I-Photoinitiatoren sind Triazine, wie z. B. Tris(trichlormethyl)triazin, Oxime, Benzoinether, Benzilketale, alpha-alpha-Dialkoxyacetophenon, Phenylglyoxylsäureester, Bisimidazole, Aroylphosphinoxide, z.B. 2,4,6-Trimethyl-benzoyl-diphenylphosphinoxid, Sulfonium-und Iodoniumsalze.

Typ II-Photoinitiatoren (Norrish-Typ-II) für die radikalische Polymerisation durchlaufen bei der Bestrahlung eine bimolekulare Reaktion, wobei der Photoinitiator im angeregten Zustand mit einem zweiten Molekül, dem Coinitiator, reagiert und durch Elektronen- oder Protonentransfer oder direkte Wasserstoffabstraktion die polymerisationsauslösenden Radikale bildet.

Beispiele für Typ-II-Photoinitiatoren sind Chinone, wie z. B. Campherchinon, aromatische Ketoverbindungen, wie z. B. Benzophenone in Kombination mit tertiären Aminen, Alkylbenzophenone, halogenierte Benzophenone, 4,4'-Bis(dimethylamino)benzophenon (Michlers Keton), Anthron, Methyl-p-(dimethylamino)benzoat, Thioxanthon, Ketocoumarine, alpha-Aminoalkylphenon, alpha-Hydroxyalkylphenon und kationische Farbstoffe, wie z. B. Methylenblau, in Kombination mit tertiären Aminen.

Für den UV- und kurzwelligen sichtbaren Bereich werden Typ-I- und Typ-II-Photoinitiatoren eingesetzt, für den längerwelligen sichtbaren Lichtbereich kommen überwiegend Typ-II-Photoinitiatoren zum Einsatz.

Auch die in der EP 0 223 587 A beschriebenen Photoinitiatorsysteme, bestehend aus einer Mischung aus einem Ammoniumalkylarylborat und einem oder mehreren Farbstoffen, können als Photoinitiator vom Typ II für die radikalische Polymerisation eingesetzt werden. Als Ammoniumalkylarylborat eignen sich beispielsweise Tetrabutylammonium Triphenylhexylborat, Tetrabutylammonium Triphenylbutylborat, Tetrabutylammonium Trinapthylhexylborat, Tetrabutylammonium Tris(4-tert.butyl)-phenylbutylborat, Tetrabutylammonium Tris-(3-fluorphenyl)-hexylborat, Tetramethylammonium Triphenylbenzylborat, Tetra(n-hexyl)ammonium (sec-Butyl)triphenylborat, 1-Methyl-3-octylimidazolium

Dipentyldiphenylborat und Tetrabutylammonium Tris-(3-chlor-4-methylphenyl)-hexylborat (Cunningham et al., RadTech'98 North America UV/EB Conference Proceedings, Chicago, Apr. 19-22, 1998).

Die für die anionische Polymerisation verwendeten Photoinitiatoren sind in der Regel Typ I-Systeme und leiten sich von Übergangsmetall-Komplexen der ersten Reihe ab. Hier sind beispielsweise Chrom-Salze, wie z.B. trans-$Cr(NH_3)_2(NCS)_4^-$ (Kutal et al, Macromolecules 1991, 24, 6872) oder Ferrocenyl-Verbindungen (Yamaguchi et al. Macromolecules 2000, 33, 1152) zu nennen.

Eine weitere Möglichkeit der anionischen Polymerisation besteht in der Verwendung von Farbstoffen, wie Kristallviolett Leukonitril oder Malachitgrün Leukonitril, die durch photolytischen Zerfall Cyanoacrylate polymerisieren können (Neckers et al. Macromolecules 2000, 33, 7761). Dabei wird das Chromophor in die Polymere eingebaut, so dass die resultierenden Polymere durchgefärbt sind.

Die für die kationische Polymerisation verwendbaren Photoinitiatoren bestehen im Wesentlichen aus drei Klassen: Aryldiazonium-Salze, Onium-Salze (hier speziell: Iodonium-, Sulfonium- und Selenonium-Salze) sowie Organometall-Verbindungen. Phenyldiazonium-Salze können unter Bestrahlung sowohl in Gegenwart als auch bei Abwesenheit eines Wasserstoff-Donors ein Kation erzeugen, das die Polymerisation initiiert. Die Effizienz des Gesamtsystems wird durch die Natur des verwendeten Gegenions zur Diazonium-Verbindung bestimmt. Bevorzugt sind hier die wenig reaktiven, aber recht teuren $SbF_6^-$, $AsF_6^-$ oder $PF_6^-$. Für den Einsatz in Beschichtung dünner Filme sind diese Verbindungen in der Regel weniger geeignet, da durch den nach der Belichtung freigesetzten Stickstoff die Oberflächengüte herabgesetzt wird (pinholes) (Li et al., Polymeric Materials Science and Engineering, 2001, 84, 139).

Sehr weit verbreitet und auch in vielerlei Form kommerziell erhältlich sind Onium-Salze, speziell Sulfonium- und Iodonium-Salze. Die Photochemie dieser Verbindungen ist nachhaltig untersucht worden. Die Iodonium-Salze zerfallen nach der Anregung zunächst homolytisch und erzeugen somit ein Radikal und ein Radikalkation, welches zunächst durch H-Abstraktion in ein Kation übergeht, das schließlich ein Proton freisetzt und dadurch die kationische Polymerisation startet (Dektar et al. J. Org. Chem. 1990, 55, 639; J. Org. Chem., 1991, 56. 1838). Dieser Mechanismus ermöglicht den Einsatz von Iodonium-Salzen ebenfalls für die radikalische Photopolymerisation. Hierbei kommt der Wahl des Gegenions erneut eine große Bedeutung zu. Bevorzugt werden ebenfalls $SbF_6^-$, $AsF_6^-$ oder $PF_6^-$ verwendet. Ansonsten ist in dieser Strukturklasse die Wahl der Substitution des Aromaten recht frei und im Wesentlichen durch die Verfügbarkeit geeigneter Startbausteine für die Synthese bestimmt. Bei den Sulfonium-Salzen handelt es sich um Verbindungen, die nach Norrish-Typ II zerfallen (Crivello et al., Macromolecules, 2000, 33, 825). Auch bei den Sulfonium-Salzen kommt der Wahl des Gegenions eine kritische Bedeutung zu, die sich im Wesentlichen in der Härtungsgeschwindigkeit der Polymere äußert. Die besten Ergebnisse werden in der Regel mit $SbF_6^-$ Salzen erzielt.

Da die Eigenabsorption von Iodonium- und Sulfonium-Salze bei < 300 nm liegt, sollten diese Verbindungen für die Photopolymerisation mit nahem UV oder kurzwelligem sichtbarem Licht entsprechend sensibilisiert werden. Dies gelingt durch die Verwendung von längerwellig absorbierenden Aromaten wie z.B. Anthracen und Derivaten (Gu et al., Am. Chem. Soc. Polymer Preprints, 2000, 41 (2), 1266) oder Phenothiazin bzw. dessen Derivaten (Hua et al, Macromolecules 2001, 34, 2488-2494).

Es kann vorteilhaft sein, Gemische dieser Sensibilisatoren oder auch Photoinitiatoren einzusetzen. Je nach verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Bevorzugte Photoinitiatoren sind Mischungen aus Tetrabutylammonium Tetrahexylborat, Tetrabutylammonium Triphenylhexylborat, Tetrabutylammonium Triphenylbutylborat, Tetrabutylammonium Tris-(3-fluorphenyl)-hexylborat ([191726-69-9], CGI 7460, Produkt der BASF SE, Basel, Schweiz) und Tetrabutylammonium Tris-(3-Chlor-4-methylphenyl)-hexylborat ([1147315-11-4], CGI 909, Produkt der BASF SE, Basel, Schweiz) mit kationischen Farbstoffen.

Beispiele für kationische Farbstoffe sind Astrazon Orange G, Basic Blue 3, Basic Orange 22, Basic Red 13, Basic Violett 7, Methylenblau, Neu Methylenblau, Azur A, Pyrillium I, Safranin O, Cyanin, Gallocyanin, Brilliant Grün, Kristallviolett, Ethylviolett und Thionin.

Besonders bevorzugt ist, wenn die erfindungsgemäße Photopolymer-Formulierung einen kationischen Farbstoff der Formel $F^+An^-$ enthält.

Unter kationischen Farbstoffen der Formel $F^+$ werden bevorzugt solche der folgenden Klassen verstanden: Acridin-Farbstoffe, Xanthen-Farbstoffe, Thioxanthen-Farbstoffe, Phenazin-Farbstoffe, Phenoxazin-Farbstoffe, Phenothiazin-Farbstoffe, Tri(het)arylmethan-Farbstoffe - insbesondere Diamino- und Triamino(het)arylmethan-Farbstoffe, Mono-, Di- und Trimethincyanin-Farbstoffe, Hemicyanin-Farbstoffe, extern kationische Merocyanin-Farbstoffe, extern kationische Neutrocyanin-Farbstoffe, Nullmethin-Farbstoffe - insbesondere Naphtholactam-Farbstoffe, Streptocyanin-Farbstoffe. Solche Farbstoffe sind beispielsweise in H. Berneth in Ullmann's Encyclopedia of Industrial Chemistry, Azine Dyes, Wiley-VCH Verlag, 2008, H. Berneth in Ullmann's Encyclopedia of Industrial Chemistry, Methine Dyes and Pigments, Wiley-VCH Verlag, 2008, T. Gessner, U. Mayer in Ullmann's Encyclopedia of Industrial Chemistry, Triarylmethane and Diarylmethane Dyes, Wiley-VCH Verlag, 2000 beschrieben.

Mit $An^-$ ist ein Anion gemeint. Bevorzugte Anionen $An^-$ sind insbesondere $C_8$- bis $C_{25}$-Alkansulfonat, vorzugs-

weise $C_{13}$- bis $C_{25}$-Alkansulfonat, $C_3$- bis $C_{18}$-Perfluoralkansulfonat, $C_4$- bis $C_{18}$-Perfluoralkansulfonat, das in der Alkylkette mindestens 3 Wasserstoffatome trägt, $C_9$- bis $C_{25}$-Alkanoat, $C_9$- bis $C_{25}$-Alkenoat, $C_8$- bis $C_{25}$-Alkylsulfat, vorzugsweise $C_{13}$- bis $C_{25}$-Alkylsulfat, $C_8$-bis $C_{25}$-Alkenylsulfat, vorzugsweise $C_{13}$- bis $C_{25}$-Alkenylsulfat, $C_3$- bis $C_{18}$-Perfluoralkylsulfat, $C_4$-bis $C_{18}$-Perfluoralkylsulfat, das in der Alkylkette mindestens 3 Wasserstoffatome trägt, Polyethersulfate basierend auf mindestens 4 Äquivalenten Ethylenoxid und/oder Äquivalenten 4 Propylenoxid, Bis-$C_4$- bis $C_{25}$-Alkyl-, $C_5$- bis $C_7$-Cycloalkyl-, $C_3$- bis $C_8$-Alkenyl- oder $C_7$- bis $C_{11}$-Aralkyl-sulfosuccinat, durch mindestens 8 Fluoratome substituiertes Bis-$C_2$- bis $C_{10}$-alkyl-sulfosuccinat, $C_8$- bis $C_{25}$-Alkyl-sulfoacetate, durch mindestens einen Rest der Gruppe Halogen, $C_4$- bis $C_{25}$-Alkyl, Perfluor-$C_1$- bis $C_8$-Alkyl und/oder $C_1$- bis $C_{12}$-Alkoxycarbonyl substituiertes Benzolsulfonat, ggf. durch Nitro, Cyano, Hydroxy, $C_1$- bis $C_{25}$-Alkyl, $C_1$- bis $C_{12}$-Alkoxy, Amino, $C_1$- bis $C_{12}$-Alkoxycarbonyl oder Chlor substituiertes Naphthalin- oder Biphenylsulfonat, ggf. durch Nitro, Cyano, Hydroxy, $C_1$- bis $C_{25}$-Alkyl, $C_1$- bis $C_{12}$-Alkoxy, $C_1$- bis $C_{12}$-Alkoxycarbonyl oder Chlor substituiertes Benzol-, Naphthalin- oder Biphenyldisulfonat, durch Dinitro, $C_6$- bis $C_{25}$-Alkyl, $C_4$- bis $C_{12}$-Alkoxycarbonyl, Benzoyl, Chlorbenzoyl oder Toluoyl substituiertes Benzoat, das Anion der Naphthalindicarbonsäure, Diphenyletherdisulfonat, sulfonierte oder sulfatierte, ggf. mindestens einfach ungesättigte $C_8$- bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, Bis-(sulfo-$C_2$- bis $C_6$-alkyl)-itaconsäureester, (Sulfo-$C_2$- bis $C_6$-alkyl)-$C_6$- bis $C_{18}$-alkancarbonsäureester, (Sulfo-$C_2$-bis $C_6$-alkyl)-acryl- oder methacrylsäureester, ggf. durch bis zu 12 Halogenreste substituiertes Triscatecholphosphat, ein Anion der Gruppe Tetraphenylborat, Cyanotriphenylborat, Tetraphenoxyborat, $C_4$- bis $C_{12}$-Alkyl-triphenylborat, deren Phenyl- oder Phenoxy-Reste durch Halogen, $C_1$- bis $C_4$-Alkyl und/oder $C_1$- bis $C_4$-Alkoxy substituiert sein können, $C_4$- bis $C_{12}$-Alkyl-trinaphthylborat, Tetra-$C_1$- bis $C_{20}$-alkoxyborat, 7,8- oder 7,9-Dicarba-nido-undecaborat$^{(1-)}$ oder $^{(2-)}$, die gegebenenfalls an den B- und/oder C-Atomen durch eine oder zwei $C_1$- bis $C_{12}$-Alkyl- oder Phenyl-Gruppen substituiert sind, Dodecahydro-dicarbadodecaborat$^{(2-)}$ oder B-$C_1$- bis $C_{12}$-Alkyl-C-phenyl-dodecahydro-dicarbadodecaborat$^{(1-)}$ steht, wobei bei mehrwertigen Anionen wie Naphthalindisulfonat An- für ein Äquivalent dieses Anions steht, und wobei die Alkan- und Alkylgruppen verzweigt sein können und/oder durch Halogen, Cyano, Methoxy, Ethoxy, Methoxycarbonyl oder Ethoxycarbonyl substituiert sein können.

Besonders bevorzugte Anionen sind sec-$C_{11}$- bis $C_{18}$-Alkansulfonat, $C_{13}$- bis $C_{25}$-Alkylsulfat, verzweigtes $C_8$- bis $C_{25}$-Alkylsulfat, ggf. verzweigtes Bis-$C_6$- bis $C_{25}$-alkylsulfosuccinat, sec- oder tert.-$C_4$- bis $C_{25}$-Alkylbenzolsulfonat, sulfonierte oder sulfatierte, ggf. mindestens einfach ungesättigte $C_8$- bis $C_{25}$-Fettsäureester von aliphatischen $C_1$- bis $C_8$-Alkoholen oder Glycerin, Bis-(sulfo-$C_2$- bis $C_6$-alkyl)-$C_3$- bis $C_{12}$-alkandicarbonsäureester, (Sulfo-$C_2$- bis $C_6$-alkyl)-$C_6$- bis $C_{18}$-alkancarbonsäureester, durch bis zu 12 Halogenreste substituiertes Triscatecholphosphat, Cyanotriphenylborat, Tetraphenoxyborat, Butyltriphenylborat.

Bevorzugt ist auch, wenn das Anion An- des Farbstoffs einen AClogP im Bereich von 1-30, besonders bevorzugt im Bereich von 1-12 und insbesondere bevorzugt im Bereich von 1-6,5 aufweist. Der AClogP wird nach J. Comput. Aid. Mol. Des. 2005, 19, 453; Virtual Computational Chemistry Laboratory, http://www.vcclab.org berechnet.

Besonders bevorzugt ist, wenn der Photoinitiator eine Kombination von Farbstoffen, deren Absorptionsspektren zumindest teilweise den Spektralbereich von 400 bis 800 nm abdecken, mit wenigstens einem auf die Farbstoffe abgestimmten Coinitiator umfasst.

Bevorzugt ist auch, wenn wenigstens ein für eine Laserlichtfarbe ausgewählt aus blau, grün und rot geeigneter Photoinitiator in der Photopolymer-Formulierung enthalten ist.

Weiter bevorzugt ist auch, wenn die Photopolymer-Formulierung für wenigstens zwei Laserlichtfarben ausgewählt aus blau, grün und rot je einen geeigneten Photoinitiator enthält.

Ganz besonders bevorzugt ist schließlich, wenn die Photopolymer-Formulierung für jede der Laserfarben blau, grün und rot jeweils einen geeigneten Photoinitiator enthält.

Die Photopolymerschicht kann bevorzugt eine Schichtdicke von 5 $\mu$m bis 100 $\mu$m, besonders bevorzugt von 5 $\mu$m bis 30 $\mu$m, ganz besonders bevorzugt von 10 $\mu$m bis 25 $\mu$m aufweisen.

Die Photopolymerschich kann in bevorzugten Ausführungsformen der Erfindung auf ein Substrat S aufgebracht sein. Bevorzugte Materialien oder Materialverbünde des Substrats S basieren auf transparenten Folien auf Basis von Polycarbonat (PC), Polyethylenterephthalat (PET), Polybutylenterephthalat (PBT), Polyethylen, Polypropylen, Celluloseacetate, Cellulosehydrat, Cellulosenitrat, Cycloolefinpolymere, Polystyrol, Polyepoxide, Polysulfon, Cellulosetriacetat (CTA), Polyamid, Polymethylmethacrylat, Polyvinylchlorid, Polyvinylbutyral oder Polydicyclopentadien oder deren Mischungen. Bevorzugt basieren sie auf solchen Folien, die hohe optische Güte aufweisen und einen guten Brechungsindexmatch zur verwendeten Photopolymerformulierung. Besonders bevorzugt basieren sie auf PC, PET und CTA.

Prinzipiell können auch Materialverbünde wie Folienlaminate oder Coextrudate eingesetzt für das Substrat S eingesetzt werden. Bevorzugte Materialverbünde sind Duplex- und Triplexfolien aufgebaut nach einem der Schemata A/B, A/B/A oder A/B/C. Besonders bevorzugt sind PC/PET, PET/PC/PET und PC/TPU (TPU = Thermoplastisches Polyurethan).

In die Schicht P kann ein Volumenhologramm einbelichtet werden. Dies kann ein Reflektions-, ein Transmissions- oder ein Edgelit Hologramm sein. Die Einbelichtung kann mit einem monochromatischen Laser durchgeführt werden, wobei mittels eines durch einen Strahlteiler und einer Aufweitung des Laserstrahls ein Interferenzfeld erzeugt

werden kann. Der Laser kann dabei verschiedenen Farben (Lichtfrequenzen) erzeugen, vorzugsweise eine blaue, rote, grüne oder gelbe Emissionswellenlänge verwendet werden kann. Ebenfalls ist es möglich gleichzeitig oder nacheinander verschiedenfarbige Laser zu verwenden. So ist es damit möglich zwei oder mehrfarbige Reflektionshologramme zu erzeugen.

In der Schicht P können ein oder mehrere Hologramme an derselben Stelle oder nebeneinander einbelichtet werden. Belichtet man an derselben Stelle ein, so können unterschiedliche Bildinhalte einbelichtet werden. Ebenfalls können auch verschiedene Ansichten eines Objektes mit leicht variierenden Rekonstruktionswinkeln einbelichtet werden, so dass Stereogramme entstehen. Ebenfalls ist es möglich versteckte Hologramme und Mikrotexte einzubelichten. Gleichermaßen ist es im Falle von Transmissionshologrammen möglich mehrere lichtleitende Funktionen und/ oder lichtleitende Funktionen für verschiedene spektrale Bereiche einzubelichten.

Zur Applikation der Schutzschicht auf die Photopolymerschicht sind alle jeweiligen gängigen, dem Fachmann bekannten Beschichtungs- oder Druckverfahren geeignet, wie insbesondere Rakeln, Gießen, Schlitzdüse, Drucken, Siebdruck, Spritzen, oder Inkjet-Druck. Bevorzugt sind Kastenrakel, Spiralrakel, automatisches Filmaufziehgerät mit Universalapplikator, Siebdruck und Spritzen.

Besonders bevorzugt ist es die Schutzschicht durch Spritzen aufzutragen. Weiterhin ist es dabei bevorzugt ist, die Formulierung vorher durch geeignete Filter zu filtrieren und somit Partikel abzutrennen. Der Einsatz in Spritzkammern mit gereinigter Luft / Atmosphäre ist ebenfalls bevorzugt.

Alternativ ist es bevorzugt, wenn die Schutzschicht durch Siebdruck aufgebracht wird. Es kann empfehlenswert sein, die Formulierung dafür durch weitere Zusatzstoffe wie Lösungsmittel, Verdünner, Verlaufsadditive, Entschäumer zu modifizieren ohne die oben genannten Bedingungen einzuschränken.

Die vorliegende Erfindung wird anhand der Fign. 1 - 4 und den folgenden Beispielen näher ausgeführt. Darin zeigt

Fig. 1 den schematischen Aufbau einer Folienbeschichtungsanlage zur Herstellung von Photopolymerfilmen,

Fig.2 die Geometrie eines Holographic Media Testers (HMT) bei $\lambda$ = 633 nm (Helium Neon Laser): M = Spiegel, S = Verschluss, SF = Raumfilter, CL = Kollimatorlinse, $\lambda/2$ = $\lambda/2$ Platte, PBS = polarisationsempfindlicher Strahlteiler, D = Detektor, I = Irisblende, $\alpha_0$ = - 16.8°, $\beta_0$ = 36.8° sind die Einfallswinkel der kohärenten Strahlen außerhalb der Probe (des Mediums) gemessen. RD = Referenzrichtung des Drehtisches,

Fig.3 die gemessene Beugungseffizienz $\eta$ als Kreise gegen das Winkeldetuning $\Delta\Omega$ aufgetragen und die Anpassung der Kogelnik Theorie als durchgezogene Linie, sowie

Fig. 4 das Spektrum der zum Bleichen verwendeten UV-Lampe (Herstellerangabe).

**Messmethoden:**

OH-Zahlen

Die angegebenen OH-Zahlen wurden gemäß DIN 53240-2 bestimmt.

NCO-Werte

Die angegebenen NCO-Werte (Isocyanat-Gehalte) wurden gemäß DIN EN ISO 11909 bestimmt.

Gelpermeationschromatografie zur Bestimmung der gewichtsmittleren Molekulargewichtsanteile (GPC)

Als Eluent diente unstabilisiertes Tetrahydrofuran bei einer Flussrate von 0,6 ml/min. Als stationäre Phase wurden vier hintereinander geschaltete Säulen der Fa. Macherey&Nagel, Typ: 2 x Nucleogel GPC 100-5 sowie 2 x Nucleogel GPC 50-5 verwendet. Als Trennmaterial dient quervernetztes Polystyrol-Divinylbenzol-Polymer mit 5 µm Partikelgröße sowie 50 bzw. 100 Å Porenweite bei einer Säulenlänge von 30 cm sowie 7,7 mm Durchmesser. Jede Säule wies eine Länge von 30 cm und einen Durchmesser von 7,7 mm auf. Die Kalibrierung erfolgte mit einer Polystyrolkalibrierung im Bereich von 162 bis 8400 g/mol. Zur Auswertung wurde die Software PSS WINGPC Unity der Firma PolymerStandardServices verwendet.

Messung der Trockenschichtdicke der Photopolymere

Die physikalische Schichtdicke wurde mit marktgängigen Weisslichtinterferometern ermittelt, wie z.B. das Gerät FTM-Lite NIR Schichtdickenmessgerät der Firma Ingenieursbüro Fuchs.

Die Bestimmung der Schichtdicke beruhte im Prinzip auf Interferenzerscheinungen an dünnen Schichten. Dabei überlagerten sich Lichtwellen, die an zwei Grenzflächen unterschiedlicher optischer Dichte reflektiert worden sind. Die

ungestörte Überlagerung der reflektierten Teilstrahlen führte nun zur periodischen Aufhellung und Auslöschung im Spektrum eines weißen Kontinuumstrahlers (z.B. Halogenlampe). Diese Überlagerung nennt der Fachmann Interferenz. Die Interferenzspektren wurden gemessen und mathematisch ausgewertet.

Festgehalt

Ca. 1g der Probe wurde in einem unlackierten Dosendeckel aufgetragen und mittels einer Büroklammer gut verteilt. Dosendeckel und Büroklammer wurden zuvor gewogen. Die Probe mit Büroklammer und Dosendeckel wurden eine Stunde bei 125°C in einem Ofen getrocknet. Der Festgehalt ergab sich: (Auswaage-Tara)*100 / (Einwaage-Tara).

Viskosität

Die angegebenen Viskositäten wurden mit einem Auslaufbecher DIN 4 mm durchgeführt; entsprechend DIN EN ISO 2431 bzw. DIN 53211 (DIN4 Becher).

Teilchengröße

Die Teilchengrößenmessung erfolgte mit einem Zetasizer (Fa. Malvern) Typ HPP 5002.

Messung des L-Wertes gemäß CIELAB-System, der totalen Transmission und des Haze-Wertes

Die Messungen wurden auf einem Kugelspektrometer vom Typ Hunter Ultrascan Pro von Hunter Lab, FMS Jansen GmbH & Co. KG, Murnau am Staffelsee, Deutschland in Anlehnung an die Normen ASTM E 308 für L*a*b* und ASTM E 1348 / ISO 13468 für die Bestimmung der totalen Transmission durchgeführt. Als totale Transmission wurde dabei der Mittelwert der Transmission zwischen 360 nm und 840 nm bezeichnet, wobei jeweils 1 Einzelmessung pro 5 nm durchgeführt wurden. Zur Messung wurde die Lampenart D65 und ein Beobachtungswinkel von 10° benutzt. Der Messbereich war von 350 nm- 1100 nm, wobei für die farbmetrische Bestimmung nur bis 850 nm gemessen wurde. Als Eichung wurde eine Messung an Luft durchgeführt und die Transmission dieser Messung auf 100% gesetzt.

Der Haze-Wert wird gemäß der Norm ASTM D 1003 ermittelt.

Messung der Oberflächenrauigkeit Rz

Die Oberflächenuntersuchungen wurden durch die Firma Currenta GmbH & Co. OHG an einem Weißlichtinterferometer des Typs "Wyko NT 1100" der Firma Veeco Instruments GmbH, Mannheim, Deutschland im Tastschnittverfahren durchgeführt. Die Auswertung der Daten mit der gerätespezifischen Software erfolgte unter Zugrundelegung der DIN EN ISO 4287. Der Wert Rz für die Oberflächenrauheit war dabei der gemittelte Durchschnitt der 10 größten Einzelrautiefen einer Messung auf einer Messfläche von 94,1 μm x 123,6 μm.

**<u>Einsatzstoffe:</u>**

**Einsatzstoffe für die Photopolymerformulierungen:**

Komponente H: Desmodur® N 3900, Produkt der Bayer MaterialScience AG, Leverkusen, Deutschland, Hexandiisocyanat-basiertes Polyisocyanat, Anteil an Iminooxadiazindion mindestens 30 %, NCO-Gehalt: 23,5 %.

Komponente K: Produkt der Bayer MaterialScience AG, Leverkusen, Deutschland, das Herstellungsverfahren ist unten beschrieben.

Komponente L1 (Phosphorthioyltris(oxy-4,1-phenyleniminocarbonyloxyethan-2,1-diyl)-triacrylat): Produkt der Bayer MaterialScience AG, Leverkusen, Deutschland, die Herstellung ist unten beschrieben.

Komponente L2 (2-({[3-(Methylsulfanyl)phenyl]carbamoyl}oxy)ethylprop-2-enoat): Produkt der Bayer MaterialScience AG, Leverkusen, Deutschland, die Herstellung ist unten beschrieben.

Komponente M (Bis(2,2,3,3,4,4,5,5,6,6,7,7-dodecafluorheptyl)-(2,2,4-trimethylhexan-1,6-diyl)biscarbamat): Produkt der Bayer MaterialScience AG, Leverkusen, Deutschland, die Herstellung ist unten beschrieben.

Komponente N: Fascat 4102 0,07 %, Urethanisierungskatalysator, Butylzinn-tris(2-ethylhexanoat), Produkt der Arkema GmbH, Düsseldorf, Deutschland.

BYK® 310 (silikonbasiertes Oberflächenadditiv der Firma BYK-Chemie GmbH, Wesel, 25%ige Lösung in Xylol) 0,3%

Komponente O: C. I. Basic Blue 3 als Bis-(2-ethylhexyl)sulfosuccinat 0,26 %, Safranin O als Bis-(2-ethylhexyl)sulfosuccinat 0,13 % und Astrazon Orange G als Bis-(2-ethylhexyl)sulfosuccinat 0,13% mit CGI 909 (Versuchsprodukt der Fa.BASF SE, Basel, Schweiz) 1,5%, als Lösung in 5,8% Ethylacetat gelöst. Prozentgehalte beziehen sich auf die Gesamtformulierung des Mediums. Die Herstellung der Farbstoffe ist bekannt aus PCT/EP 2011/069389.

Komponente P: Ethylacetat (CAS-Nr. 141-78-6).

**Substrate:**

Substrat 1 ist Hostaphan® RNK 36 µm, ein Produkt der Mitsubishi Polyester Film GmbH, Wiesbaden, Deutschland. Substrat 2 ist Transphan® OG 622 SL (60 µm), ein Produkt der LOFO High Tech Film GmbH, Weil am Rhein, Deutschland.

**Einsatzstoffe für die Lackformulierungen:**

Bayhydrol® UV 2280 ist ein Produkt der Bayer MaterialScience AG, Leverkusen, Deutschland, Urethanacrylatdispersion zur Herstellung von wässrigen UV-Lacken.

Bayhydrol® UV XP 2690 ist ein Produkt der Bayer MaterialScience AG, Leverkusen, Deutschland, Urethanacrylatdispersion zur Herstellung von wässrigen UV-Lacken.

Bayhydrol® UV XP 2775 ist ein Produkt der Bayer MaterialScience AG, Leverkusen, Deutschland, Urethanacrylatdispersion zur Herstellung von wässrigen UV-Lacken.

Dispersion 1 ist ein Produkt der Bayer MaterialScience AG, Leverkusen, Deutschland, das Herstellungsverfahren ist unten beschrieben.

Irgacure® 500 ist ein Produkt der BASF SE, Ludwigshafen, Deutschland.

BYK® 346 (Oberflächenadditiv der Firma BYK-Chemie GmbH, Wesel, Lösung einespolyethermodifizierten Polysiloxans, 48%ig in Dipropylenglykolmonomethylether).

Borchigel® LW 44 ist ein Produkt der OMG Borchers GmbH, Langenfeld (Rheinland), Deutschland.

Herstellung von Dispersion 1:

In einem 1000ml-Vierhals-Rundkolben mit Rückflußkühler, beheizbarem Ölbad, mechanischem Rührer, Luftdurchleitung (11/h), Innenthermometer und Tropftrichter wurden 180,82g Ebecryl® 600 (Cytec Surface Specialties Germany GmbH, Wiesbaden, Deutschland), 96,21g Desmophen® PE170HN (Bayer MaterialScience AG, Leverkusen, Deutschland), 29,31g 2-Ethyl-1,3-hexandiol (CAS-Nr. 94-96-2, Sigma-Aldrich GmbH, Steinheim, Deutschland), 0,645g Inhibitor KB (3,5-Di-tert-4-butylhydroxytoluol, CAS-Nr. 128-37-0, Sigma-Aldrich GmbH, Steinheim, Deutschland), 28mg Phenothiazin (CAS-Nr. 92-84-2, Sigma-Aldrich GmbH, Steinheim, Deutschland) in 138 g Aceton (CAS-Nr. 67-64-1) vorgelegt und dann schnell 122,56g Isophorondiisocyanat (Bayer MaterialScience AG, Leverkusen, Deutschland) und 63,45 g Hexamethylendiisocyanat (Bayer MaterialScience AG, Leverkusen, Deutschland) zugegeben, auf 60°C erwärmt und über 4h gerührt, bis ein NCO-Wert von 4,08% erreicht war. Dann wurden weitere 232g Aceton und 21,61g N-Methyldiethanolamin (CAS-Nr. 105-59-9, Sigma-Aldrich GmbH, Steinheim, Deutschland) zugesetzt und weitere 4h gerührt, bis ein NCO-Wert von 1,10% (mit Korrektur N-Methyldiethanolamin) erreicht war. Die Temperatur wurde auf 40°C erniedrigt und es wurden 4,89g Ethylendiamin (CAS-Nr. 107-15-3, Sigma-Aldrich GmbH, Steinheim, Deutschland) mitsamt 34,42g Aceton beigemengt und nach etwa 10min mit 18,75g DL-Milchsäure (90%-ig, CAS-Nr. 50-21-5, Carl Roth

GmbH + Co. KG, Karlsruhe, Deutschland) neutralisiert. Anschließend wurden 757g Wasser langsam zugegeben und das Aceton bei 40°C und 120-40 mbar abdestilliert. Man erhielt eine milchige Dispersion mit einem Festkörpergehalt von 39,6%, einer mittleren Teilchengröße von 103nm und einer Auslaufzeit (DIN 4) von 16s.

**Herstellungsvorschriften weiterer Einsatzstoffe für die Photopolymerformulierungen:**

Herstellung von Komponente K:

In einem 1 L Kolben wurden 0,18 g Zinnoctoat, 374.8 g ε-Caprolacton und 374.8 g eines difunktionellen Polytetrahydrofuranpolyetherpolyols (Equivalentgewicht 500 g/Mol OH) vorgelegt und auf 120 °C aufgeheizt und so lange auf dieser Temperatur gehalten, bis der Festgehalt (Anteil der nicht-flüchtigen Bestandteile) bei 99.5 Gew.-% oder darüber lag. Anschließend wurde abgekühlt und das Produkt als wachsartiger Feststoff erhalten.

Herstellung von Komponente L1 (Phosphorthioyltris(oxy-4,1-phenyleniminocarbonyloxyethan-2,1-diyl)-triacrylat):

In einem 500 mL Rundkolben wurden 0,1 g 2,6-Di-tert.-butyl-4-methylphenol, 0,05 g Dibutylzinndilaurat (Desmorapid® Z, Bayer MaterialScience AG, Leverkusen, Deutschland) sowie und 213.07 g einer 27 %-igen Lösung von Tris(p-isocyanatophenyl)thiophosphat in Ethylacetat (Desmodur® RFE, Produkt der Bayer MaterialScience AG, Leverkusen, Deutschland) vorgelegt und auf 60 °C erwärmt. Anschließend wurden 42.37 g 2-Hydroxyethylacrylat zugetropft und die Mischung weiter auf 60 °C gehalten, bis der Isocyanatgehalt unter 0,1 % gesunken war. Danach wurde abgekühlt und im Vakuum das Ethylacetat vollständig entfernt. Das Produkt wurde als teilkristalliner Feststoff erhalten.

Herstellung von Komponente L2 (2-({[3-(Methylsulfanyl)phenyl]carbamoyl}oxy)ethylprop-2-enoat):

In einem 100 mL Rundkolben wurden 0,02 g 2,6-Di-tert.-butyl-4-methylphenol, 0,01 g Desmorapid® Z, 11.7 g 3-(Methylthio)phenylisocyanat vorgelegt und vorgelegt und auf 60 °C erwärmt. Anschließend wurden 8.2 g 2-Hydroxyethylacrylat zugetropft und die Mischung weiter auf 60 °C gehalten, bis der Isocyanatgehalt unter 0,1 % gesunken war. Danach wurde abgekühlt. Das Produkt wurde als hellgelbe Flüssigkeit erhalten.

Herstellung des Additives C (Bis(2,2,3,3,4,4,5,5,6,6,7,7-dodecafluorheptyl)-(2,2,4-trimethylhexan-1,6-diyl)biscarbamat):

In einem 2000 mL Rundkolben wurden 0,02 g Desmorapid® Z und 3,60 g 2,4,4-Trimethylhexane-1,6-diisocyanat (TMDI) vorgelegt und auf 70 °C erwärmt. Anschließend wurden 11,39 g 2,2,3,3,4,4,5,5,6,6,7,7-Dodecafluorheptan-1-ol zugetropft und die Mischung weiter auf 70 °C gehalten, bis der Isocyanatgehalt unter 0,1 % gesunken war. Danach wurde abgekühlt. Das Produkt wurde als farbloses Öl erhalten.

**Herstellung von holographischen Medien**

Im Folgenden wird die kontinuierliche Herstellung von holographischen Medien in der Form von Filmen Photopolymer-Formulierungen beschrieben.
Zur Herstellung wurde die in Figur 1 beschriebene Folienbeschichtungsanlage verwendet.
Figur 1 zeigt den schematischen Aufbau der verwendeten Beschichtungsanlage. In Figur 1 haben die einzelnen Bauteile die folgenden Bezugszeichen:

1 Vorratsbehälter

1' Dosiereinrichtung

2 Vakuumentgasungseinrichtung

3 Filter

4 Statischer Mischer

5 Beschichtungseinrichtung

6 Umlufttrockner

7 Trägersubstrat

8 Abdeckschicht

Zur Herstellung der Photopolymer-Formulierung wurden in einem Rührbehälter 304,3g Komponente K (Polyol) schrittweise mit einer Schreibmonomermischung aus 138g Komponente L1 und 138g Komponente L2, mit 191g Additiv M, 0,60g Komponente N, 2,55g BYK® 310 und 101g Komponente P versetzt und gemischt. Anschließend wurden 66,5g Komponente O der Mischung im Dunklen hinzugefügt und vermischt, so dass eine klare Lösung erhalten wurde. Wenn nötig, wurde die Formulierung für kurze Zeit bei 60 °C erwärmt, um die Einsatzstoffe schneller in Lösung zu bringen. Dieses Gemisch wurde in einen der beiden Vorratsbehälter 1 der Beschichtungsanlage eingebracht. In den zweiten Vorratsbehälter 1 wurde die Komponente H (Polyisocyanat) eingefüllt. Beide Komponenten wurden dann jeweils durch die Dosiereinrichtungen 2 im Verhältnis von 942,2 (Komponenten K bis P) zu 57,8 (Komponente H) zur Vakuumentgasungseinrichtung 3 gefördert und entgast. Von hier aus wurden sie dann jeweils durch die Filter 4 in den statischen Mischer 5 geleitet, in dem die Vermischung der Komponenten zur Photopolymer-Formulierung erfolgte. Die erhaltene, flüssige Masse wurde dann im Dunklen der Beschichtungseinrichtung 6 zugeführt.

Bei der Beschichtungseinrichtung 6 handelte es sich im vorliegenden Fall um eine dem Fachmann bekannte Schlitzdüse. Alternativ kann aber auch ein Rakelsystem (Doctor Blade). zum Einsatz kommen. Mit Hilfe der Beschichtungseinrichtung 6 wurde die Photopolymer-Formulierung bei einer Verarbeitungstemperatur von 20 °C auf das Substrat 1 oder 2 appliziert und für 5,8 Minuten bei einer Vernetzungstemperatur von 80 °C in einem Umlufttrockner 7 getrocknet. Dabei wurde ein Medium in der Form eines Films erhalten, der dann mit einer 40 $\mu$m dicken Polyethylenfolie als Abdeckschicht 9 versehen und aufgewickelt wurde.

Die erzielte Schichtdicke des Films lag bei 15 $\mu$m.

**Belichten von Transmissionsprüfhologrammen:**

Transmissionsprüfhologramme zur Bestimmung des Winkelshifts wurden mittels einer Messanordnung gemäß Figur 2 wie folgt hergestellt:

Der Strahl eines Helium Neon Lasers (Melles Griot 25-LHP-928-249, Emissionswellenlänge 633 nm) wurde mit Hilfe des Raumfilter (SF) und zusammen mit der Kollimationslinse (CL) in einen parallelen homogenen Strahl umgewandelt. Die finalen Querschnitte des Signal und Referenzstrahls werden durch die Irisblenden (I) festgelegt. Der Durchmesser der Irisblendenöffnung beträgt 0.4 cm. Die polarisationsabhängigen Strahlteiler (PBS) teilen den Laserstrahl in zwei kohärente gleich polarisierte Strahlen. Über die $\lambda/2$ Plättchen wurden die Leistung des Referenzstrahls auf 0.5 mW und die Leistung des Signalstrahls auf 0.5 mW eingestellt. Die Leistungen wurden mit den Halbleiterdetektoren (D) bei ausgebauter Probe bestimmt. Der Einfallswinkel ($\alpha_0$) des Referenzstrahls beträgt -16.8°, der Einfallswinkel ($\beta_0$) des Signalstrahls beträgt 36.8°. Die Winkel werden ausgehend von der Probennormale zur Strahlrichtung gemessen. Gemäß Figur 2 hat daher $\alpha_0$ ein negatives Vorzeichen und $\beta_0$ ein positives Vorzeichen. Am Ort der Probe (Medium) erzeugte das Interferenzfeld der zwei überlappenden Strahlen ein Gitter heller und dunkler Streifen die parallel zur Winkelhalbierenden der zwei auf die Probe einfallenden Strahlen liegen (Transmissionshologramm). Der Streifenabstand Λ, auch Gitterperiode genannt, im Medium beträgt ca. 700 nm (der Brechungsindex des Mediums mit 1,504 angenommen).

Figur 2 zeigt den holographischen Versuchsaufbau, mit dem die Beugungseffizienz (DE) der Medien gemessen wurde.

Es wurden auf folgende Weise Hologramme in das Medium geschrieben:

- Beide Shutter (S) sind für die Belichtungszeit *t* geöffnet.
- Danach wurde bei geschlossenen Shuttern (S) dem Medium 5 Minuten Zeit für die Diffusion der noch nicht polymerisierten Schreibmonomere gelassen.

Die geschriebenen Hologramme wurden nun auf folgende Weise ausgelesen. Der Shutter des Signalstrahls blieb geschlossen. Der Shutter des Referenzstrahls war geöffnet. Die Irisblende des Referenzstrahls wurde auf einen Durchmesser < 1 mm geschlossen. Damit erreichte man, dass für alle Drehwinkel ($\Omega$) des Mediums der Strahl immer vollständig im zuvor geschriebenen Hologramm lag. Der Drehtisch überstrich nun computergesteuert den Winkelbereich von $\Omega_{min}$ bis $\Omega_{max}$ mit einer Winkelschrittweite von 0.05°. $\Omega$ wird von der Probennormale zur Referenzrichtung des Drehtisches gemessen. Die Referenzrichtung ($\Omega$ = 0) des Drehtisches ergibt sich dann, wenn beim Schreiben des Hologramms der Einfallswinkel des Referenz- und des Signalstrahls betragsmäßig gleich sind also $\alpha_0$ = -26.8° und $\beta_0$ = 26.8° gilt. Allgemein gilt für das Interferenzfeld beim Schreiben ("recording") eines unsymmetrischen (slanted) Transmissionshologramms ($\alpha_0 \neq - \beta_0$):

$$\alpha_0 = \theta_0 + \Omega_{recording}$$

$\theta_0$ ist der Halbwinkel im Laborsystem außerhalb des Mediums und es gilt beim Schreiben des Hologramms:

$$\theta_0 = \frac{\alpha_0 - \beta_0}{2}$$

In diesem Fall gilt also $\theta_0$ = -26.8°.

An jedem angefahrenen Drehwinkel $\Omega$ wurden die Leistungen des in der nullten Ordnung transmittierten Strahls mittels des entsprechenden Detektors D und die Leistungen des in die erste Ordnung abgebeugten Strahls mittels des Detektors D gemessen. Die Beugungseffizienz ergab sich bei jedem angefahrenen Winkel $\Omega$ als der Quotient aus:

$$\eta = \frac{P_D}{P_D + P_T}$$

$P_D$ ist die Leistung im Detektor des abgebeugten Strahls und $P_T$ ist die Leistung im Detektor des transmittierten Strahls.

Mittels des oben beschriebenen Verfahrens wurde die Braggkurve des geschriebenen Hologramms gemessen und in einem Computer gespeichert. Sie beschreibt den Beugungswirkungsgrad $\eta$ in Abhängigkeit des Drehwinkels $\Omega$. Zusätzlich wurde auch die in die nullte Ordnung transmittierte Intensität gegen den Drehwinkel $\Omega$ aufgezeichnet und in einem Computer gespeichert.

Die zentrale Beugungseffizienz (DE = $\eta_0$) des Hologramms wurde bei $\Omega_{reconstruction}$ ermittelt.

Der Brechungsindexkontrast $\Delta$n und die Dicke d der Photopolymerschicht wurde nun mittels der Coupled Wave Theorie (siehe; H. Kogelnik, The Bell System Technical Journal, Volume 48, November 1969, Number 9 Seite 2909 - Seite 2947) an die gemessene Braggkurve und den Winkelverlauf der transmittierten Intensität ermittelt. Dabei ist zu beachten, dass wegen der durch die Photopolymerisation auftretenden Dickenschwindung der Streifenabstand Λ' des Hologramms und die Orientierung der Streifen (slant) vom Streifenabstand Λ des Interferenzmusters und dessen Orientierung abweichen kann. Demnach wird auch der Winkel $\alpha_0$' bzw. der entsprechende Winkel des Drehtisches $\Omega_{\text{reconstruction}}$, bei dem maximale Beugungseffizienz erreicht wird von $\alpha_0$ bzw. vom entsprechenden $\Omega_{\text{recording}}$ abweichen. Dadurch verändert sich die Bragg-Bedingung. Diese Veränderung wird im Auswerteverfahren berücksichtigt. Das Auswerteverfahren wird im Folgenden beschrieben:

Für die Braggkurve $\eta(\Omega)$ eines Transmissionshologramms gilt nach Kogelnik:

$$\eta = \frac{\sin^2\left(\sqrt{\nu^2 + \xi^2}\right)}{1 + \frac{\xi^2}{\nu^2}}$$

mit:

$$\nu = \frac{\pi \cdot \Delta n \cdot d'}{\lambda \cdot \sqrt{|c_s \cdot c_r|}}$$

$$\xi = -\frac{d'}{2 \cdot c_s} \cdot DP$$

$$c_s = \cos(\vartheta') - \cos(\psi') \cdot \frac{\lambda}{n \cdot \Lambda'}$$

$$c_r = \cos(\vartheta')$$

$$DP = \frac{\pi}{\Lambda'} \cdot \left( 2 \cdot \cos(\psi' - \vartheta') - \frac{\lambda}{n \cdot \Lambda'} \right)$$

$$\psi' = \frac{\beta' + \alpha'}{2} - \frac{\pi}{2}$$

$$\Lambda' = \frac{\lambda}{2 \cdot n \cdot \cos(\psi' - \alpha')}$$

Beim Auslesen des Hologramms ("reconstruction") gilt wie analog oben dargestellt:

$$\vartheta'_0 = \theta_0 + \Omega$$

$$\sin(\vartheta'_0) = n \cdot \sin(\vartheta')$$

An der Bragg-Bedingung ist das "Dephasing" *DP* = 0. Und es folgt entsprechend:

$$\alpha'_0 = \theta_0 + \Omega_{reconstruction}$$

$$\sin(\alpha'_0) = n \cdot \sin(\alpha')$$

Der noch unbekannte Winkel β' kann aus dem Vergleich der Bragg-Bedingung des Interferenzfeldes beim Schreiben des Hologramms und der Bragg-Bedingung beim Auslesen des Hologramms ermittelt werden unter der Annahme, dass nur Dickenschwindung stattfindet. Dann folgt:

$$\sin(\beta') = \frac{1}{n} \cdot \left[-\sin(\alpha_0) + \sin(\beta_0) + \sin(\theta_0 + \Omega_{reconstruction})\right]$$

$\nu$ ist die Gitterstärke und $\xi$ ist der Detuning Parameter des Brechungsindexgitters, das geschrieben wurde. n ist der mittlere Brechungsindex des Photopolymers und wurde mit 1.504 festgesetzt. $\lambda$ ist die Wellenlänge des Laserlichts im Vakuum.

Die maximale Beugungseffizienz (DE = $\eta_0$) ergibt sich dann für $\xi$ = 0 zu:

$$DE = \sin^2(\nu) = \sin^2\left(\frac{\pi \cdot \Delta n \cdot d'}{\lambda \cdot \sqrt{\cos(\alpha') \cdot \cos(\alpha' - 2\psi')}}\right)$$

Die Messdaten der Beugungseffizienz, die theoretische Braggkurve und die transmittierte Intensität werden wie in Figur 3 gezeigt gegen den zentrierten Drehwinkel

$$\Delta\Omega \equiv \Omega_{reconstruction} - \Omega = \alpha'_0 - \vartheta'_0,$$

auch Winkeldetuning genannt, aufgetragen.

Da DE bekannt ist wird die Form der theoretischen Braggkurve nach Kogelnik nur noch durch die Dicke *d'* der Photopolymerschicht bestimmt. $\Delta$n wird über DE für gegebene Dicke *d'* so nachkorrigiert, dass Messung und Theorie von DE immer übereinstimmen. d wird nun solange angepasst bis die Winkelpositionen der ersten Nebenminima und die Höhen der ersten Nebenmaxima der theoretischen Braggkurve mit den Winkelpositionen der ersten Nebenminima und den Höhen der ersten Nebenmaxima der gemessenen Braggkurve übereinstimmen.

Figur 3 zeigt die Darstellung der Braggkurve $\eta$ nach der Coupled Wave Theorie (durchgezogene Linie) und des gemessenen Beugungswirkungsgrades (Kreise) gegen den zentrierten Drehwinkel $\Delta\Omega$.

Die mittlere Energiedosis E bei der das Hologramm geschrieben wurde ergibt sich wie folgt aus den Leistungen der zwei den Winkeln $\alpha_0$ und $\beta_0$ zugeordneten Teilstrahlen (Referenzstrahl mit $P_r$ = 0.5 mW und Signalstrahl mit $P_s$ = 0.5 mW), der Belichtungszeit t und dem Durchmesser der Irisblende (0.4 cm):

$$E\,(\text{mJ/cm}^2) = \frac{2 \cdot [P_r + P_s] \cdot t\,(\text{s})}{\pi \cdot 0.4^2\ \text{cm}^2}$$

Messung des Winkelshifts von lackierten und verklebten Transmissionsprüfhologrammen Wie im vorherigen Abschnitt gezeigt stellt $\Omega_{Reconstruction}$ den Einfallswinkel zur Erfüllung der Braggbedingung dar. Wenn $\Omega_{Reconstruction}$ von $\Omega_{Recording}$ abweicht hat während der Belichtung des Hologramms und Schwindung oder Quellung der Photopolymerschicht stattgefunden. In der Regel wird es Schwindung sein.

$\Omega_{Reconstruction\ 0}$ nach der Belichtung des Prüfhologramms gemessen stellt also die Braggbedingung der nicht behandelten Probe dar. Die Abweichungen von $\Omega_{Reconstruction\ 0}$ von $\Omega_{Recording}$ sind in der Regel kleiner als $\pm$ 0.3°. Wird die Photopolymerschicht nach dem Belichten des Prüfhologramms und der Bestimmung von $\Omega_{Reconstruction\ 0}$ mit einer Klebeschicht oder einer Lackschicht versehen, kann es durch Migration von beweglichen Bestandteilen im Photopolymer und/oder der Klebe- oder Lackschicht zu erheblicher Quellung oder Schwindung kommen. Dadurch verändert sich die Gitterperiode $\Lambda$'. Misst man das so behandelte Prüfhologramm erneut findet man in der Regel einen anderen Rekonstruktionswinkel $\Omega_{Reconstruction\ 1}$ für die veränderte Braggbedingung.

Der Winkelshift, der durch die Behandlung mit der Klebe- oder Lackschicht erzeugt wird ergibt sich aus der Differenz der Rekonstruktionswinkel vor und nach der Behandlung:

$$\text{Winkelshift} = \Omega_{\text{Reconstruction } 0} - \Omega_{\text{Reconstruction } 1} \qquad \Delta\Omega\ (^\circ)$$

Ein negativer Wert für den Winkelshift zeigt eine Schwindung der Photopolymerschicht an, ein positiver Wert für den Winkelshift zeigt eine Quellung der Photopolymerschicht an. Je kleiner der Betrag des Winkelshifts ist desto geeigneter ist die Klebe- oder Lackschicht im Sinne der Erfindung. Ist der Betrag des Winkelshifts zu groß, ist die Klebe- oder Lackschicht ungeeignet.

**Bleichen des Photopolymers:**

Die Bögen des Photopolymers werden im Dunkeln auf die gewünschte Größe zurechtgeschnitten und mit Hilfe einer Gummiwalze auf eine Glasplatte der Maße 100 mm x 200 mm (3 mm Dicke) auflaminiert.Dann wurden die Proben mit der Glasseite zur Lampe hin auf das Förderband eines UV-Strahlers gelegt und mit einer Bahngeschwindigkeit von 2,5 m/min zwei Mal belichtet. Als UV-Strahler wurde eine eisendotierte Hg-Lampe vom Typ Fusion UV type "D Bulb" No. 558434 KR 85 mit 80 W / $cm^2$ Gesamtleistungsdichte verwendet. Das Spektrum der verwendeten Lampe ist in Figur 4 abgebildet (Herstellerangabe). Die Parameter entsprechen einer Dosis von 2 x 2,0 J/$cm^2$ (gemessen mit einem Light Bug des Typs ILT 490).

**Auftragung der Lacke:**

**Beispiel 1:**

94,64 g Bayhydrol® UV 2280 wurde vorgelegt. Danach wurden unter stetigem Rühren in einem Dissolver mit 1000 U/ min. 1,00g Irgacure® 500, 1,00 g BYK® 346 und 3,10 g Wasser nacheinander zugegeben und jeweils für 10 min gemischt bevor die nächste Position zugeführt wurde. Anschließend wurde die Rührgeschwindigkeit auf 500 U/ min. reduziert und 0,26 g Borchigel® LW 44, 50%ig in VE-Wasser hinzugegeben und 10 min lang gemischt. Die so erhaltene Formulierung reifte mindestens 16 h, bevor die Applikation erfolgte. Dazu wurde der Lack mit einem Rakel 50μm dick direkt auf die belichtete Photopolymerschicht mit dem Testhologramm aufgerakelt. Zum direkten Vergleich wurde dabei nur die Hälfte des Testhologramms abgedeckt. Nach 1 min bei Raumtemperatur und 1 min bei 80 °C wurde die strahlenhärtbare Schicht zweimal bei 2,5 m/min auf ein Transportband unter einer UV-Lampe (Typ Fusion UV 558434 KR 85, 80 W/$cm^2$) vorbeigefahren und damit gehärtet. Der Schichtaufbau war dann trocken.

**Beispiel 2:**

47,33 g Bayhydrol® UV XP 2690 und 47,33 g Bayhydrol® UV XP 2775 wurden zusammen vorgelegt. Danach wurden unter stetigem Rühren in einem Dissolver mit 1000 U/ min. 1,00 g Irgacure® 500, 1,00 g BYK® 346 und 3,09 g Wasser nacheinander zugegeben und jeweils für 10 min gemischt bevor die nächste Position zugeführt wurde. Anschließend wurde die Rührgeschwindigkeit auf 500 U/ min. reduziert und 0,25 g Borchigel® LW 44, 50%ig in VE-Wasser hinzugegeben und 10 min lang gemischt. Die so erhaltene Formulierung reifte mindestens 16 h, bevor die Applikation erfolgte. Dazu wurde der Lack mit einem Rakel 50μm dick direkt auf die belichtete Photopolymerschicht mit dem Testhologramm aufgerakelt. Zum direkten Vergleich wurde dabei nur die Hälfte des Testhologramms abgedeckt. Nach 1 min bei Raumtemperatur und 1 min bei 80 °C wurde die strahlenhärtbare Schicht zweimal bei 2,5 m/min auf ein Transportband unter einer UV-Lampe (Typ Fusion UV 558434 KR 85, 80 W/$cm^2$) vorbeigefahren und damit gehärtet. Der Schichtaufbau war dann trocken.

**Beispiel 3:**

520,52 g Dispersion 1 wurde vorgelegt. Danach wurden unter stetigem Rühren in einem Dissolver mit 1000 U/ min. 5,50 g Irgacure® 500, 5,50 g BYK® 346 und 5,5 0g Wasser nacheinander zugegeben und jeweils für 10 min gemischt bevor die nächste Position zugeführt wurde. Anschließend wurde die Rührgeschwindigkeit auf 500 U/ min. reduziert und 0,55 g Borchigel® LW 44, 50%ig in VE-Wasser hinzugegeben und 10min lang gemischt. Die so erhaltene Formulierung reifte mindestens 16 h, bevor die Applikation erfolgte. Dazu wurde der Lack mit einem Rakel 50 μm dick direkt auf die belichtete Photopolymerschicht mit dem Testhologramm aufgerakelt. Zum direkten Vergleich wurde dabei nur die Hälfte des Testhologramms abgedeckt. Nach 1 min bei Raumtemperatur und 1 min bei 80 °C wurde die strahlenhärtbare Schicht zweimal bei 2,5 m/min auf ein Transportband unter einer UV-Lampe (Typ Fusion UV 558434 KR 85, 80 W/$cm^2$) vorbeigefahren und damit gehärtet. Der Schichtaufbau war dann trocken.

**Patentansprüche**

1. Schichtaufbau aus mindestens einer Schutzschicht und mindestens einer belichteten Photopolymerschicht, wobei die Schutzschicht durch Aufbringen einer strahlenhärtbaren wässrigen Polymerdispersion, bevorzugt Polyurethandispersion, Trocknung der Dispersion und Strahlenhärten erzeugt ist, **dadurch gekennzeichnet, dass** die Schutzschicht bei einer Schutzschichtdicke von 14 µm bis 26 µm eine totale Transmission von > 90, einen L-Wert gemäß der CIELAB-Systematik von L > 96 sowie einen Haze-Wert von < 1,0% und aufweist.

2. Schichtaufbau nach Anspruch 1, **dadurch gekennzeichnet, dass** die strahlenhärtbare wässrige Polyurethandispersion dreidimensional vernetzte Polyurethan-Polymere enthält.

3. Schichtaufbau nach Anspruch 1 oder 2, **dadurch gekennzeichnet, dass** der Schichtaufbau zumindest eine Haftklebeschicht umfasst, die auf die Schutzschicht aufgebracht ist, insbesondere ein Haftklebeband.

4. Schichtaufbau nach einem der vorstehenden Ansprüche, **dadurch gekennzeichnet, dass** die belichtete Photopolymerschicht wenigstens ein Transmissionshologramm enthält, welches von der Schutzschicht zumindest teilweise bedeckt ist und dass das Aufbringen der Schutzschicht auf die belichtete Photopolymerschicht bei dem Transmissionshologramm gemäß beschriebener Messmethode einen Winkelshift kleiner 1° bewirkt, insbesondere < 0,6°.

5. Schichtaufbau nach einem der vorstehenden Ansprüche, **dadurch gekennzeichnet, dass** die Schutzschicht eine Dicke von 5 bis 100 µm aufweist, insbesondere von 10 bis 60 µm, bevorzugt von 20 bis 40 µm.

6. Schichtaufbau nach einem der vorstehenden Ansprüche, **dadurch gekennzeichnet, dass** die Schutzschicht bei einer Schutzschichtdicke von 14 µm bis 26 µm eine totale Transmission von > 91 %, einen L-Wert gemäß der CIELAB-Systematik von L > 96,5 sowie einen Haze-Wert von < 0,75% aufweist.

7. Schichtaufbau nach einem der vorstehenden Ansprüche, **dadurch gekennzeichnet, dass** die wässrige Polyurethandispersion wenigstens ein Polyurethanacrylat enthält.

8. Schichtaufbau nach Anspruch 7, **dadurch gekennzeichnet, dass** das Polyurethanacrylat erzeugt ist aus

   A) eine oder mehrere Verbindungen mit unvernetzten, polymergebundenen (Meth-)Acrylaten mit einer OH-Zahl von 20 bis 300 mg KOH/g Substanz und/oder
   B) gegebenenfalls von A) verschiedene Verbindungen mit mindestens einer gegenüber Isocyanat reaktiven Gruppe und mindestens einer strahlenhärtbaren Doppelbindung,
   C) gegebenenfalls eine oder mehrere Verbindungen, die mindestens eine gegenüber Isocyanat reaktiven Gruppe aber keine strahlenhärtbare Doppelbindungen besitzen,
   D) eine oder mehrere Verbindungen mit mindestens einer gegenüber Isocyanat reaktiven Gruppe und zusätzlich nichtionischen, anionischen oder zur Ausbildung von anionischen Gruppen befähigten Gruppen, die für die Polyurethanacrylate dispergierend wirken oder D') eine oder mehrere Verbindungen mit mindestens einer gegenüber Isocyanat reaktiven Gruppe und zusätzlich kationischen oder zur Ausbildung von kationischen Gruppen befähigten Gruppen, die für die Polyurethanacrylate dispergierend wirken,
   E) ein oder mehrere organische Verbindungen mit 2 oder mehr Isocyanatgruppen,
   F) gegebenenfalls Neutralisationsamine in Kombination mit Verbindungen D) oder F') Neutralisationssäuren F') in Kombination mit Verbindungen D'),
   G) gegebenenfalls Urethanisierungskatalysatoren, sowie

   gegebenenfalls weiteren Hilfs- und Zusatzstoffen.

9. Schichtaufbau nach Anspruch 8, **dadurch gekennzeichnet, dass** die Komponente A) ausgewählt ist aus aromatischen oder aliphatischen Polyepoxy(meth)acrylaten, Polyester(meth)acrylaten, Polyepoxy(meth)acrylaten, mono- oder dihydroxyfunktionellen (Meth)acrylatgruppen-haltigen Verbindungen oder Mischungen von diesen.

10. Schichtaufbau nach Anspruch 8 oder 9, **dadurch gekennzeichnet, dass** der Anteil nicht polymergebundener strahlenhärtbarer Verbindungen < 10 Gew.-% bezogen auf den Feststoffanteil des erzeugten Polyurethanacrylats beträgt, besonders bevorzugt < 5 Gew.- %, wobei die nicht polymergebundenen strahlenhärtbaren Verbindungen insbesondere als Acrylate mit zwei oder mehr C-C Doppelbindungen vorliegen.

**11.** Schichtaufbau nach einem der Ansprüche 8 bis 10, **dadurch gekennzeichnet, dass** der Anteil Isocyanatgruppenhaltiger Verbindungen > 10 Gew.-% bezogen auf den Feststoffanteil des erzeugten Polyurethanacrylats beträgt, besonders bevorzugt > 20 Gew.- %.

**12.** Verfahren zur Erzeugung eines Schichtaufbaus nach einem der Ansprüche 1 bis 11 umfassend die Schritte:

Bereitstellen einer belichteten Photopolymerschicht,
Aufbringen einer strahlenhärtbaren wässrigen Polymerdispersion, insbesondere einer strahlenhärtbaren wässrigen Polyurethandispersion auf die Photopolymerschicht
Trocknen der aufgebrachten Polymerdispersion und
Strahlenhärten der Polymerdispersion zur Ausbildung der Schutzschicht.

**13.** Verfahren nach Anspruch 12, **dadurch gekennzeichnet, dass** die Polymerdispersion durch Rakeln, Gießen, Drucken, Siebdruck, Spritzen, oder Inkjet-Druck, insbesondere Auftragen mittels Spritzen, Siebdruck, Kastenrakel, Spiralrakel oder Filmaufziehgerät appliziert wird.

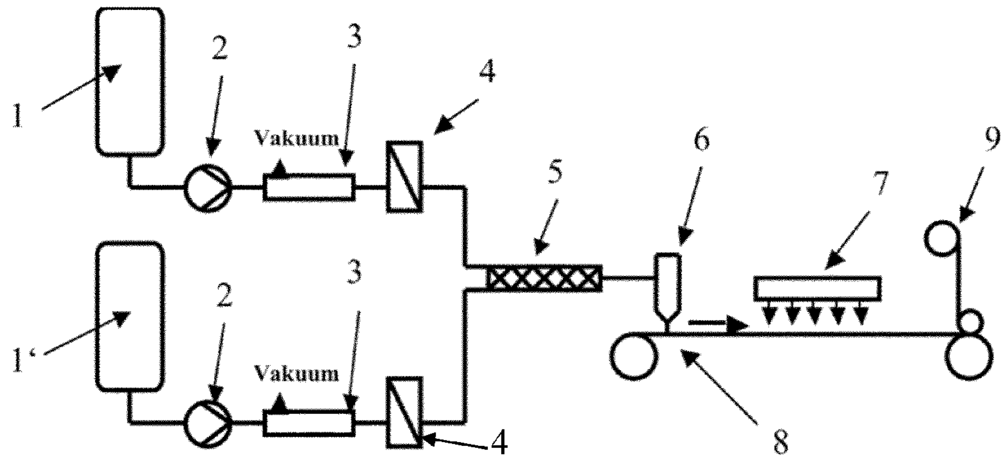
1
1'
2
2
3
3
Vakuum
Vakuum
4
4
5
6
7
8
9

Fig. 1

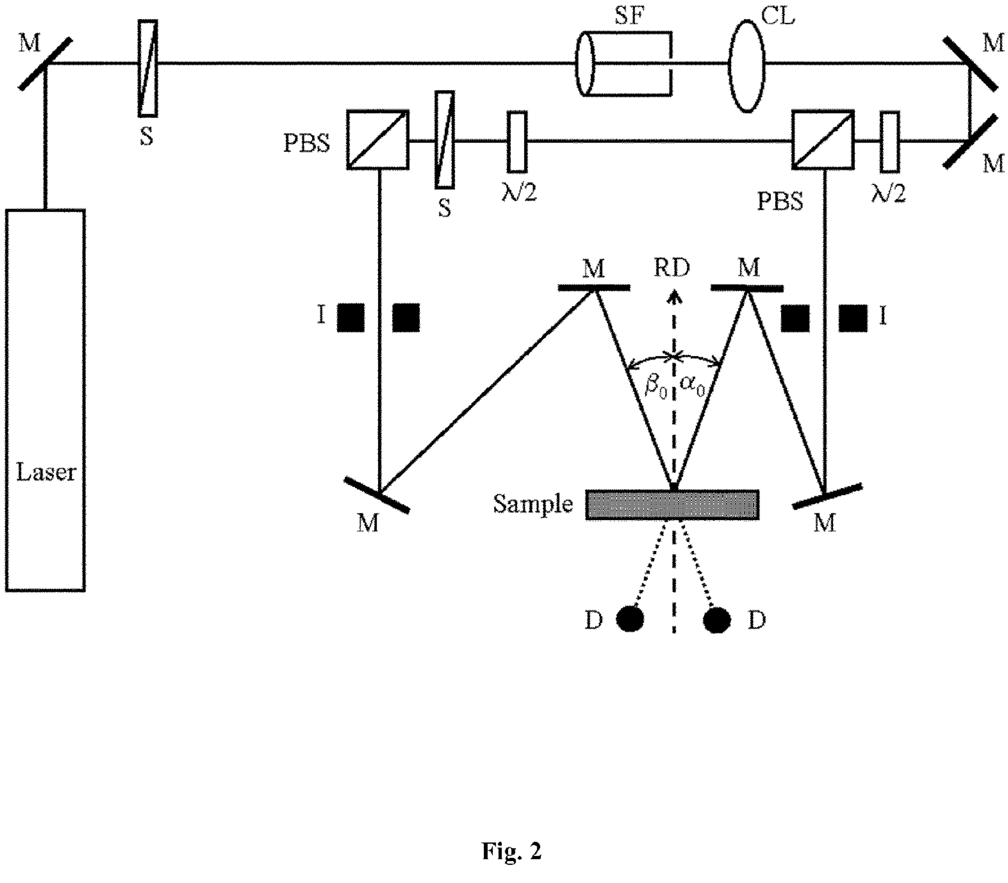
M
S
SF
CL
M
PBS
S
λ/2
PBS
λ/2
M
Laser
I
I
M
RD
M
β0
α0
M
Sample
M
D
D

Fig. 2

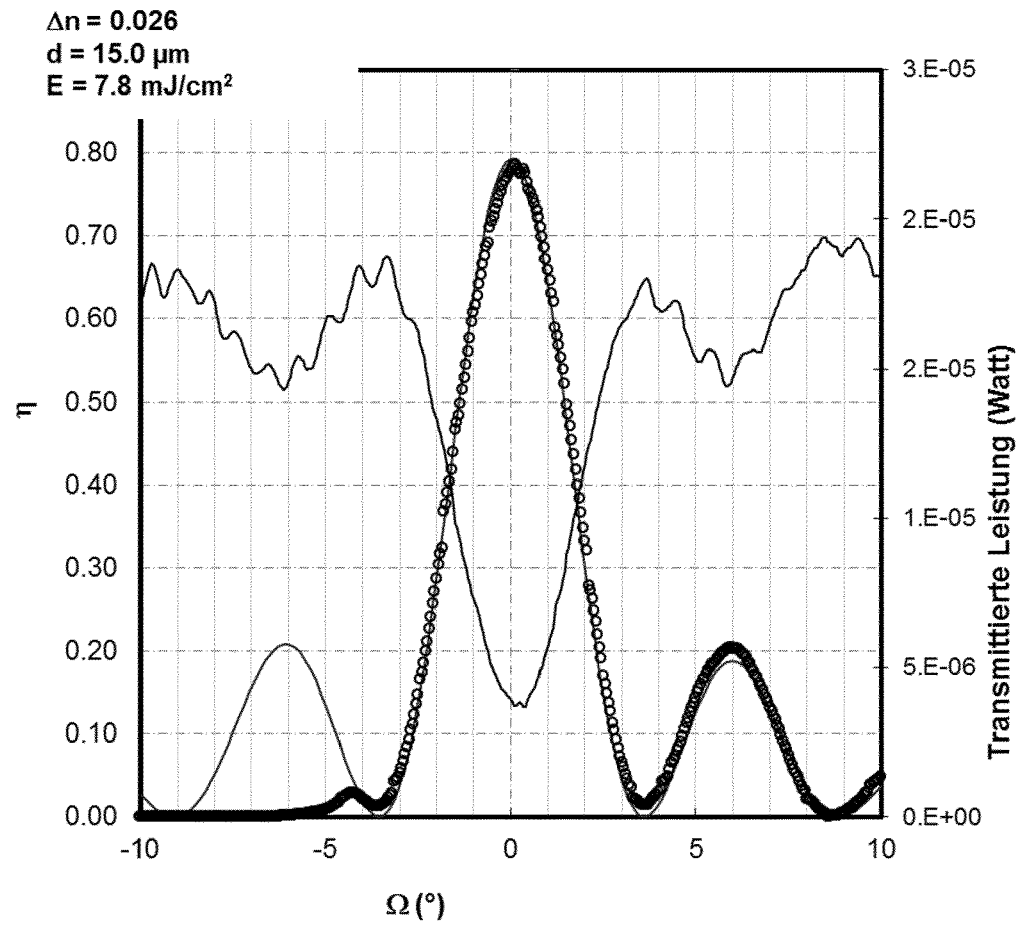
Δn = 0.026
d = 15.0 µm
E = 7.8 mJ/cm²
η
Transmittierte Leistung (Watt)
Ω (°)
0.80
0.70
0.60
0.50
0.40
0.30
0.20
0.10
0.00
3.E-05
2.E-05
2.E-05
1.E-05
5.E-06
0.E+00
-10
-5
0
5
10

Fig. 3

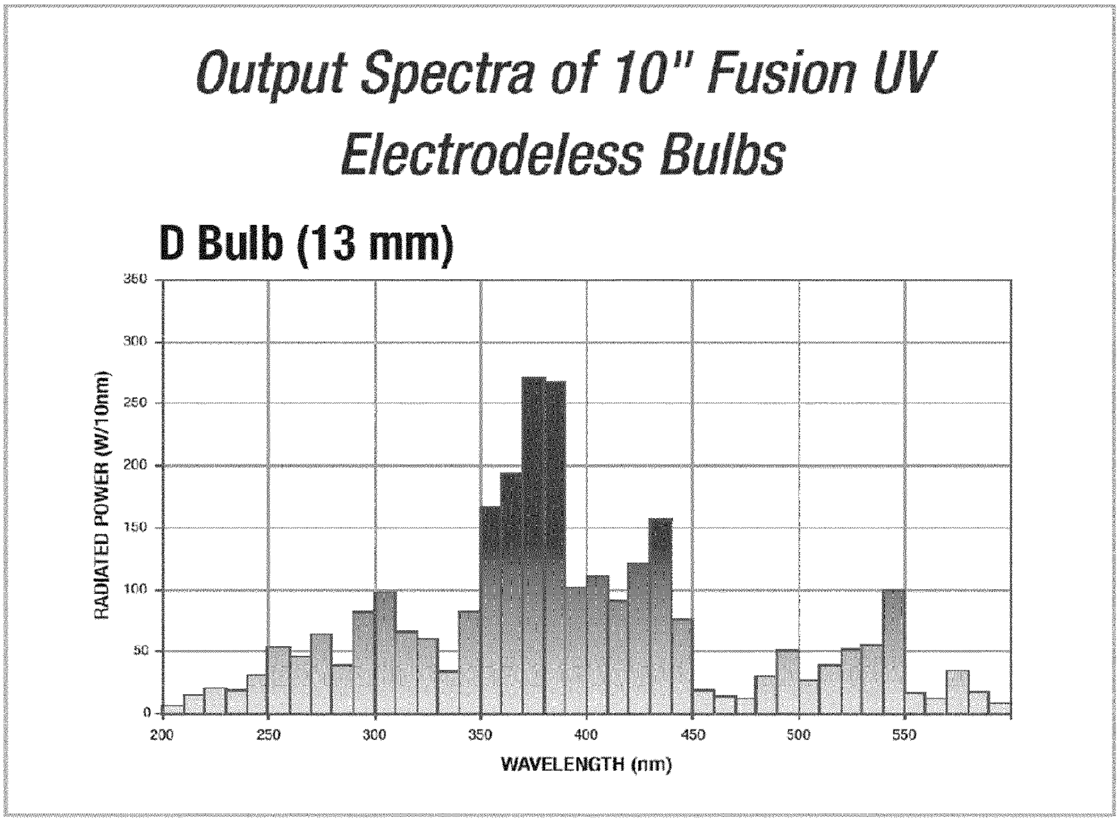
Output Spectra of 10" Fusion UV
Electrodeless Bulbs
D Bulb (13 mm)
RADIATED POWER (W/10nm)
350
300
250
200
150
100
50
0
200
250
300
350
400
450
500
550
WAVELENGTH (nm)

Fig. 4

Europäisches Patentamt
European Patent Office
Office européen des brevets

# EUROPÄISCHER RECHERCHENBERICHT

Nummer der Anmeldung
EP 14 15 6117

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 995 648 A2 (DAINIPPON PRINTING CO LTD [JP]) 26. November 2008 (2008-11-26)<br>* Absatz [0106] - Absatz [0108] *<br>----- | 1,7,12, 13 | INV.<br>G11B7/245<br>G11B7/254 |
| A | US 2006/275671 A1 (ETO KOJI [JP] ET AL) 7. Dezember 2006 (2006-12-07)<br>* 1: substrate<br>2: protective layer<br>3: hologramm<br>7: PRIMER PU aq. dispersion<br>4: heat-seal layer;<br>Absatz [0147] - Absatz [0149]; Beispiele 9,10 *<br>* Absatz [0076]; Abbildungen 6-8 *<br>----- | 1,12 | |

RECHERCHIERTE SACHGEBIETE (IPC)
G11B

Der vorliegende Recherchenbericht wurde für alle Patentansprüche erstellt

1

| Recherchenort | Abschlußdatum der Recherche | Prüfer |
|---|---|---|
| Den Haag | 5. Juni 2014 | Stabel, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 14 15 6117

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-06-2014

| Im Recherchenbericht angeführtes Patentdokument | Datum der Veröffentlichung | Mitglied(er) der Patentfamilie | Datum der Veröffentlichung |
|---|---|---|---|
| EP 1995648 A2 | 26-11-2008 | CN 101327700 A | 24-12-2008 |
| | | EP 1995648 A2 | 26-11-2008 |
| | | JP 5045542 B2 | 10-10-2012 |
| | | JP 2009009105 A | 15-01-2009 |
| | | JP 2012208520 A | 25-10-2012 |
| | | US 2008299464 A1 | 04-12-2008 |
| US 2006275671 A1 | 07-12-2006 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2011054797 A
- WO 2011067057 A
- WO 2013102603 A
- EP 2613318 A
- WO 2011107398 A
- EP 2396356 A
- EP 2113523 A
- EP 916647 A
- EP 928799 A
- EP 2172503 A1
- EP 0223587 A
- EP 2011069389 W


### In der Beschreibung aufgeführte Nicht-Patentliteratur


- **ACKERMANN ; EICHLER.** Optical Holography a Practical Approach. Wiley VCH Verlag GmbH & Co. KGaA, 2007, 248
- Ullmanns Encyclopädie der technischen Chemie. Verlag Chemie, vol. 19, 31-38
- **CUNNINGHAM et al.** *RadTech'98 North America UV/EB Conference Proceedings,* 19. April 1998
- **YAMAGUCHI et al.** *Macromolecules,* 2000, vol. 33, 1152
- **NECKERS et al.** *Macromolecules,* 2000, vol. 33, 7761
- **LI et al.** *Polymeric Materials Science and Engineering,* 2001, vol. 84, 139
- **DEKTAR et al.** *J. Org. Chem.,* 1990, vol. 55, 639
- *J. Org. Chem.,* 1991, vol. 56, 1838
- **CRIVELLO et al.** *Macromolecules,* 2000, vol. 33, 825
- **GU et al.** *Am. Chem. Soc. Polymer Preprints,* 2000, vol. 41 (2), 1266
- **HUA et al.** *Macromolecules,* 2001, vol. 34, 2488-2494
- Chemistry & Technology of UV & EB Formulations For Coatings, Inks & Paints. SITA Technology, 1991, vol. 3, 61-328
- **H. BERNETH.** Ullmann's Encyclopedia of Industrial Chemistry, Azine Dyes. Wiley-VCH Verlag, 2008
- **H. BERNETH.** Ullmann's Encyclopedia of Industrial Chemistry, Methine Dyes and Pigments. Wiley-VCH Verlag, 2008
- **T. GESSNER ; U. MAYER.** Ullmann's Encyclopedia of Industrial Chemistry, Triarylmethane and Diarylmethane Dyes. Wiley-VCH Verlag, 2000
- J. Comput. Aid. Mol. Des. Virtual Computational Chemistry Laboratory, 2005, vol. 19, 453
- **H. KOGELNIK.** *The Bell System Technical Journal,* November 1969, vol. 48 (9), 2909-2947